# EUROPEAN PATENT APPLICATION

(11) **EP 3 466 721 A1**
(43) Date of publication of application: **10.04.2019**
(21) Application number: 17806756.7
(22) Date of filing: 31.05.2017
(51) Int. Cl.: B60C 5/14, B29D 30/30

(54) **PNEUMATIC TIRE INNER LINER, PNEUMATIC TIRE, AND PNEUMATIC TIRE PRODUCTION METHOD**

(30) Priority: 31.05.2016 JP 2016109542
(71) Applicant: Bridgestone Corporation, Tokyo 104-8340 (JP); Kuraray Co., Ltd., Okayama 710-0801 (JP)
(72) Inventor: KAYASHIMA Kentaro, Tokyo 104-8340 (JP); YOKOKURA Hiroyuki, Tokyo 104-8340 (JP); SUGIMOTO Toshikazu, Tokyo 104-8340 (JP); NONAKA Yasuhiro, Kurashiki-shi Okayama 713-8550 (JP); SUZUKI Makoto, Kurashiki-shi Okayama 713-8550 (JP); HAYASHI Nahoto, Kurashiki-shi Okayama 713-8550 (JP)
(74) Representative: Oxley, Robin John George
(86) International application number: PCT/JP2017/020337
(87) International publication number: WO 2017/209205

(57) **Abstract**

This disclosure provides an inner liner of a pneumatic tire having high adhesiveness to an adjacent rubber member, which is an inner liner (100) of a pneumatic tire including a film layer (10) having at least a gas barrier layer (11) and an adhesion layer (20) disposed on at least one side of the film layer (10), where the gas barrier layer (11) contains at least a thermoplastic resin, the adhesion layer (20) contains at least a polystyrene-based thermoplastic elastomer, and the polystyrene-based thermoplastic elastomer has a styrene content of 40 mass% to 55 mass%.

## Description

### TECHNICAL FIELD

This disclosure relates to an inner liner of a pneumatic tire, a pneumatic tire, and a method of producing a pneumatic tire.

### BACKGROUND

A rubber composition containing substances such as a butyl rubber and a halogenated butyl rubber as the main raw material has been conventionally used for an inner liner provided as an air barrier layer on the inner surface of a tire to retain the internal pressure of the tire. However, these rubber compositions containing a butyl-based rubber as the main raw material have low gas barrier properties, and therefore, when using such a rubber composition for an inner liner, the thickness of the inner liner has to be about 1 mm. As a result, the weight of the inner liner occupies, for example, about 5% of the weight of the tire, which renders the reduction in tire weight and improvement in automobile fuel efficiency difficult.

On the other hand, it is known that a thermoplastic resin such as an ethylene-vinyl alcohol copolymer (hereinafter may be abbreviated to "EVOH") is superior in gas barrier properties to a rubber. For example, the air permeation amount of an EVOH is 1/100 or less of that of the aforementioned butyl-based rubber composition for an inner liner, so that the internal pressure retention of a tire can be improved even if the thickness is 100 µm or less. Therefore, when an EVOH is used as an inner liner, the weight of a tire can be reduced because a thickness of 100 µm or less is acceptable. Furthermore, when an EVOH is used as an inner liner, breaking due to the bending deformation during tire rolling hardly occurs, and cracks hardly occur, either. Therefore, it is considered effective to use a thermoplastic resin such as an EVOH for the inner liner of a pneumatic tire even from the perspective of improving the internal pressure retention of the pneumatic tire.

However, a thermoplastic resin such as an EVOH has poor adhesiveness to a rubber member used in a tire, so that an adhesion layer made of, for example, an epoxidized natural rubber (ENR) is separately provided between an inner liner made of a thermoplastic resin and a rubber member (see JP 2012-250571 A (PTL 1)).

### CITATION LIST

### Patent Literature

PTL 1: JP 2012-250571 A

### SUMMARY

### (Technical Problem)

As described above, the peeling of an inner liner made of a thermoplastic resin can be suppressed by separately providing an adhesion layer made of, for example, an ENR between the inner liner and a rubber member. However, since the adhesion layer is also exposed on the innermost surface of a tire, it adheres to a vulcanizing bladder during vulcanization and is difficult to be discharged from a vulcanizing pan, which causes inconvenience in production.

It could thus be helpful to provide an inner liner of a pneumatic tire having high adhesiveness to an adjacent rubber member.

Furthermore, this disclosure also provides a pneumatic tire that uses such an inner liner and has high adhesiveness between the inner liner and an adjacent rubber member, as well as a method of producing the same.

### (Solution to Problem)

We provide the followings to solve the aforementioned problem.

The inner liner of a pneumatic tire of this disclosure is an inner liner of a pneumatic tire including a film layer having at least a gas barrier layer, and an adhesion layer disposed on at least one side of the film layer, where
the gas barrier layer contains at least a thermoplastic resin,
the adhesion layer contains at least a polystyrene-based thermoplastic elastomer, and
the polystyrene-based thermoplastic elastomer has a styrene content of 40 mass% to 55 mass%.

The inner liner of a pneumatic tire of this disclosure has high adhesiveness to an adjacent rubber member.

In a preferable embodiment of the inner liner of a pneumatic tire of this disclosure, the adhesion layer is disposed on both sides of the film layer. In this case, when the inner liner is extended in the tire circumferential direction and the end portions of the inner liner in the tire circumferential direction are arranged to overlap each other on the tire inner surface, the adhesion layers of the end portions come into contact with each other. The adhesiveness between the adhesion layers is higher than the adhesiveness between the film layer and the adhesion layer, so that it is possible to suppress the peeling between the end portions of the inner liner in the tire circumferential direction.

In another preferable embodiment of the inner liner of a pneumatic tire of this disclosure, the film layer further includes an elastic layer disposed on at least one side of the gas barrier layer, where the elastic layer contains at least a thermoplastic elastomer. In this case, the crack resistance of the inner liner is improved.

It is preferable that the film layer is formed by alternately laminating the gas barrier layer and the elastic layer, and the elastic layer is located on both outermost surfaces of the film layer. In this case, the crack resistance of the inner liner is further improved.

For the inner liner of a pneumatic tire of this disclosure, it is preferable that a rubber-like elastic body layer with a thickness of 0.1 mm to 1.0 mm is laminated on at least one side of the inner liner. In this case, the occurrence of cracks in the inner liner can be suppressed.

The pneumatic tire of a first embodiment of this disclosure includes the inner liner of a pneumatic tire as described above, where
the inner liner is extended in the tire circumferential direction and the end portions of the inner liner in the tire circumferential direction are arranged to overlap each other in the tire radial direction on the tire inner surface,
both the end portions of the inner liner in the tire circumferential direction are parallel to the tire width direction, and
the overlapping width of the end portions of the inner liner in the tire circumferential direction is in a range of 5 mm to 20 mm.

The pneumatic tire of the first embodiment of this disclosure has high adhesiveness between the inner liner and an adjacent rubber member.

The pneumatic tire of a second embodiment of this disclosure includes the inner liner of a pneumatic tire as described above, where
the inner liner is extended in the tire circumferential direction and the end portions of the inner liner in the tire circumferential direction are arranged to overlap each other in the tire radial direction on the tire inner surface,
the end portion of the inner liner alternately has a peak portion and a valley portion,
the angle of the top (apex) of the peak portion and the angel of the bottom of the valley portion of the end portion of the inner liner are in a range of 45° to 120°, and
the overlapping width of the end portions of the inner liner in the tire circumferential direction is in a range of 1 mm to 13 mm.

The pneumatic tire of the second embodiment of this disclosure also has high adhesiveness between the inner liner and an adjacent rubber member.

The pneumatic tire of this disclosure preferably includes a rubber-like elastic body layer with a thickness of 0.1 mm to 1.0 mm on the outer side in the tire radial direction of the inner liner. In this case, it is possible to improve the peeling resistance of the end portions of the inner liner while suppressing the occurrence of cracks in the inner liner.

The thickness of the rubber-like elastic body layer is more preferably 0.2 mm to 0.6 mm. In this case, it is possible to further improve the peeling resistance of the end portions of the inner liner while further suppressing the occurrence of cracks in the inner liner.

The method of producing a pneumatic tire of this disclosure is a method of producing the pneumatic tire as described above, including
forming a green tire by laminating another tire member on the inner liner of a pneumatic tire as described above, and
vulcanizing the green tire.

In the method of producing a pneumatic tire of this disclosure, a green tire may be formed by laminating a rubber-like elastic body layer on the inner liner as described above to obtain a laminated body and further laminating another tire member on the laminated body.

According to the method of producing a pneumatic tire of this disclosure, it is possible to produce a pneumatic tire having high adhesiveness between an inner liner and an adjacent rubber member.

### (Advantageous Effect)

According to this disclosure, it is possible to provide an inner liner of a pneumatic tire having high adhesiveness to an adjacent rubber member.

Furthermore, according to this disclosure, it is possible to provide a pneumatic tire having high adhesiveness between an inner liner and an adjacent rubber member, as well as a method of producing the same.

### BRIEF DESCRIPTION OF THE DRAWINGS

In the accompanying drawings:
FIG. 1 is a partial cross-sectional view of an example of the inner liner of a pneumatic tire of this disclosure;
FIG. 2 is a partial cross-sectional view of an example of the pneumatic tire of this disclosure;
FIG. 3 is a partial cross-sectional view of the joint of the inner liner end portions of an example of the pneumatic tire of this disclosure, as seen from the tire inner surface;
FIG. 4 is a partial cross-sectional view of the joint of the inner liner end portions of an example of the pneumatic tire of this disclosure, as seen from the tire width direction; and
FIG. 5 is a partial cross-sectional view of the joint of the inner liner end portions of another example of the pneumatic tire of this disclosure, as seen from the tire width direction.

### DETAILED DESCRIPTION

### <Inner Liner of Pneumatic Tire>

The following illustrates and describes the inner liner of a pneumatic tire of this disclosure in detail based on an embodiment thereof.

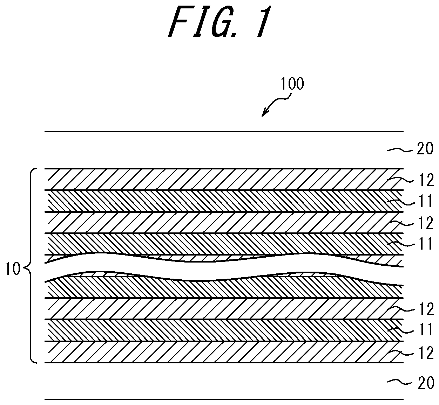

FIG. 1 is a partial cross-sectional view of an example of the inner liner of a pneumatic tire of this disclosure. The inner liner 100 illustrated in FIG. 1 includes a film layer 10 and adhesion layers 20 disposed on both sides of the film layer 10.

The inner liner 100 illustrated in FIG. 1 has the adhesion layer 20 disposed on both sides of the film layer 10. However, for the inner liner of a pneumatic tire of this disclosure, the adhesion layer may be disposed only on one side of the film layer.

The inner liner of a pneumatic tire of this disclosure (hereinafter may be abbreviated to "inner liner") preferably has an adhesion layer 20 disposed on both sides of a film layer 10, as the inner liner 100 illustrated in FIG. 1. In this case, a rubber-like elastic body layer may be laminated on one side of the film layer 10. In a case where the adhesion layer is disposed on both sides of the film layer or in a case where the adhesion layer is disposed on one side of the film layer and the rubber-like elastic body layer is laminated on the other side of the film layer, if the inner liner is extended in the tire circumferential direction and the end portions of the inner liner in the tire circumferential direction are arranged to overlap each other on the tire inner surface, then the adhesion layer at the end portions come into contact with each other or the adhesion layer at one end portion adheres to the rubber-like elastic body layer at the other end portion, so that the peeling between the end portions of the inner liner in the tire circumferential direction can be suppressed.

The film layer 10 of the inner liner 100 illustrated in FIG. 1 has a gas barrier layer 11 and elastic layers 12 disposed on both sides of the gas barrier layers 11, where the gas barrier layer 11 and the elastic layer 12 are alternately laminated.

The film layer 10 in FIG. 1 has the elastic layer 12 disposed on both sides of the gas barrier layer 11. However, the film layer of the inner liner of a pneumatic tire of this disclosure may have at least a gas barrier layer. The film layer may consist of only a gas barrier layer, and may have a gas barrier layer and another layer (for example, an elastic layer).

The inner liner of a pneumatic tire of this disclosure preferably has a gas barrier layer 11 and an elastic layer 12, as the inner liner 100 illustrated in FIG. 1. In this case, the elastic layer 12 is preferably disposed on at least one side of the gas barrier layer 11, and more preferably disposed on both sides of the gas barrier layer 11. When the film layer has a gas barrier layer and an elastic layer, the crack resistance of the inner liner is improved. When the elastic layer is disposed on both sides of the gas barrier layer, the crack resistance of the inner liner is further improved.

Note that the film layer of the inner liner of a pneumatic tire of this disclosure may have another layer in addition to the gas barrier layer and the elastic layer.

For the inner liner of a pneumatic tire of this disclosure, the gas barrier layer contains at least a thermoplastic resin. The gas barrier layer may contain another component in addition to a thermoplastic resin, and may consist of only a thermoplastic resin. The other component here is preferably a soft resin with a dynamic storage modulus E' at -20°C lower than that of the thermoplastic resin.

The thermoplastic resin used for the gas barrier layer is not particularly limited. Examples of the thermoplastic resin include an ethylene-vinyl alcohol copolymer-based resin, a polyamide-based resin, a polyvinylidene chloride-based resin, and a polyester-based resin, among which an ethylene-vinyl alcohol copolymer-based resin is preferable. Such an ethylene-vinyl alcohol copolymer-based resin has a low oxygen permeation amount and very good gas barrier properties. These thermoplastic resins may be used alone or in combination of two or more.

Examples of the ethylene-vinyl alcohol copolymer-based resin include an ethylene-vinyl alcohol copolymer as well as a modified ethylene-vinyl alcohol copolymer obtained by a reaction of the ethylene-vinyl alcohol copolymer and, for example, an epoxy compound. Such a modified ethylene-vinyl alcohol copolymer has a lower elastic modulus than an ordinary ethylene-vinyl alcohol copolymer, and therefore has high break resistance in bending and excellent crack resistance in a low temperature environment.

The ethylene-vinyl alcohol copolymer preferably has an ethylene content of 25 mol% to 50 mol%, more preferably 30 mol% to 48 mol%, and even more preferably 35 mol% to 45 mol%. When the ethylene content is 25 mol% or more, the flex resistance, fatigue resistance and melt formability are good. When the ethylene content is 50 mol% or less, the gas barrier properties are sufficiently high.

Furthermore, the saponification degree (that is, the ratio of the number of vinyl alcohol unit to the total number of vinyl alcohol unit and vinyl ester unit in the ethylene-vinyl alcohol copolymer) of the ethylene-vinyl alcohol copolymer is preferably 80 mol% or more, more preferably 95 mol% or more, and even more preferably 99 mol% or more. When the saponification degree is 80 mol% or more, the gas barrier properties and the thermal stability during forming are sufficiently high.

Moreover, from the perspective of obtaining gas barrier properties, flex resistance and fatigue resistance, the ethylene-vinyl alcohol copolymer preferably has a melt flow rate (MFR) of 0.1 g/10 min to 30 g/10 min, more preferably 0.3 g/10 min to 25 g/10 min, and even more preferably 0.5 g/10 min to 20 g/10 min under a load of 2160 g at 190°C.

The method of producing the modified ethylene-vinyl alcohol copolymer is not particularly limited, yet examples thereof preferably include a method where the ethylene-vinyl alcohol copolymer and an epoxy compound are reacted in a solution. More specifically, the modified ethylene-vinyl alcohol copolymer can be produced by adding an epoxy compound to a solution of the ethylene-vinyl alcohol copolymer in the presence of an acid catalyst or an alkaline catalyst, preferably in the presence of an acid catalyst, and causing a reaction. Examples of the reaction solvent include an aprotic polar solvent such as dimethylsulfoxide, dimethylformamide, dimethylacetamide, and N-methylpyrrolidone. Examples of the acid catalyst include p-toluenesulfonic acid, methanesulfonic acid, trifluoromethanesulfonic acid, sulfuric acid, and boron trifluoride. Examples of the alkaline catalyst include sodium hydroxide, potassium hydroxide, lithium hydroxide, and sodium methoxide. The amount of the catalyst is preferably in a range of 0.0001 part by mass to 10 parts by mass with respect to 100 parts by mass of the ethylene-vinyl alcohol copolymer.

The epoxy compound to be reacted with the ethylene-vinyl alcohol copolymer is preferably a monovalent epoxy compound. A divalent or higher-valent epoxy compound may undergo a crosslinking reaction with the ethylene-vinyl alcohol copolymer to generate, for example, gels and hard spots, which deteriorates the quality of the inner liner. Among monovalent epoxy compounds, glycidol and epoxypropane are particularly preferable from the perspective of ease of production of the modified ethylene-vinyl alcohol copolymer, gas barrier properties, flex resistance and fatigue resistance. The epoxy compound to be reacted is preferably 1 part by mass to 50 parts by mass, more preferably 2 parts by mass to 40 parts by mass, and even more preferably 5 parts by mass to 35 parts by mass with respect to 100 parts by mass of the ethylene-vinyl alcohol copolymer.

From the perspective of obtaining gas barrier properties, flex resistance and fatigue resistance, the modified ethylene-vinyl alcohol copolymer preferably has a melt flow rate (MFR) of 0.1 g/10 min to 30 g/10 min, more preferably 0.3 g/10 min to 25 g/10 min, and even more preferably 0.5 g/10 min to 20 g/10 min under a load of 2160 g at 190°C.

On the other hand, the soft resin has a dynamic storage modulus E' at -20°C lower than that of the thermoplastic resin, preferably 6 × 10⁸ Pa or less. By using a soft resin with a dynamic storage modulus E' at -20°C of 6 × 10⁸ Pa or less, the elastic modulus of the gas barrier layer can be lowered, and the crack resistance and flex resistance in a low temperature environment can be improved.

Furthermore, the soft resin preferably has a functional group reacting with a hydroxyl group. When the soft resin has a functional group reacting with a hydroxyl group, the soft resin is uniformly dispersed in the thermoplastic resin. Examples of the functional group reacting with a hydroxyl group include a maleic anhydride residue, a hydroxyl group, a carboxyl group, and an amino group. Specific examples of the soft resin having such a functional group reacting with a hydroxyl group include a maleic anhydride-modified hydrogenated styrene-ethylene-butadiene-styrene block copolymer, and a maleic anhydride-modified ultra-low-density polyethylene.

Moreover, the soft resin preferably has an average particle size of 5 µm or less. When the average particle size of the soft resin is 5 µm or less, the flex resistance of the gas barrier layer can be sufficiently improved and the internal pressure retention of the tire can be sufficiently improved. The average particle size of the soft resin in the gas barrier layer can be determined, for example, by freezing a sample, cutting the sample into section with a microtome, and observing the sample under a transmission electron microscope (TEM).

The content of the soft resin in the gas barrier layer is preferably in a range of 10 mass% to 80 mass%, and more preferably in a range of 10 mass% to 30 mass%. When the content of the soft resin is 10 mass% or more, the effect of improving flex resistance is great. When the content of the soft resin is 80 mass% or less, the gas permeability is sufficiently low.

The resin composition used for the gas barrier layer may contain various additives such as a thermal stabilizer, an ultraviolet absorbing agent, an antioxidant, a colorant, and a filler in addition to the thermoplastic resin and the soft resin, to the extent that the object of this disclosure is not impaired. In a case where the resin composition used for the gas barrier layer contains these additives, the amount is preferably 50 mass% or less, more preferably 30 mass% or less, and particularly preferably 10 mass% or less with respect to the total amount of the resin composition.

The air permeability of the gas barrier layer at 20°C and 65% RH is preferably 3.0 × 10⁻¹² cm³·cm/cm²·sec·cmHg or less, and more preferably 1.0 × 10⁻¹² cm³·cm/cm²·sec·cmHg or less. The air permeability is measured in accordance with JIS K 7126-1:2006 (an equal pressure method). When the air permeability at 20°C and 65% RH is 3.0 × 10⁻¹² cm³·cm/cm²·sec·cmHg or less, the internal pressure retention of the tire is high even with a thin gas barrier layer, which sufficiently reduces the weight of the tire.

The average thickness of one layer of the gas barrier layer is preferably 0.001 µm to 10 µm. When the average thickness of one layer of the gas barrier layer is within this range, the number of layers constituting the inner liner can be increased. An inner liner with more layers has improved gas barrier properties and crack resistance as compared with an inner liner with the same overall thickness but fewer layers.

On the other hand, when the film layer 10 has an elastic layer 12, the elastic layer preferably contains at least a thermoplastic elastomer, and more preferably contains at least a polyurethane-based thermoplastic elastomer. When the elastic layer contains a thermoplastic elastomer, the crack resistance of the inner liner is further improved. When the elastic layer contains a polyurethane-based thermoplastic elastomer, the crack resistance of the inner liner is even more improved.

The elastic layer preferably contains at least a thermoplastic elastomer. However, the elastic layer may contain another component in addition to a thermoplastic elastomer, and may consist of only a thermoplastic elastomer. Examples of the other component here include a soft material with a Young's modulus at 23°C lower than that of the thermoplastic elastomer.

In a case where the elastic layer contains at least a thermoplastic elastomer, preferably a polyurethane-based thermoplastic elastomer, it is preferable that the film layer 10 is formed by alternately laminating the gas barrier layer 11 and the elastic layer 12 and the elastic layer 12 is located on both outermost surfaces of the film layer 10, as the inner liner 100 illustrated in FIG. 1. Note that, although not illustrated, it is also preferable to have the gas barrier layer located on both outermost surfaces of the film layer. In this case, the gas barrier layer 11 or the elastic layer 12 is, in terms of material, closer to the adhesion layer 20 than a conventional adhesive made of a diene rubber, and therefore the adhesive strength between the adhesion layer 20 and the film layer 10 (that is, the gas barrier layer 11 or the elastic layer 12 of the outermost layer) is large and peeling hardly occurs.

Examples of the thermoplastic elastomer (TPE) used for the elastic layer include a polyurethane-based thermoplastic elastomer, a polystyrene-based thermoplastic elastomer, a polyolefin-based thermoplastic elastomer, a polydiene-based thermoplastic elastomer, a polyvinyl chloride-based thermoplastic elastomer, a chlorinated polyethylene-based thermoplastic elastomer, a polyester-based thermoplastic elastomer, a polyamide-based thermoplastic elastomer, and a fluororesin-based thermoplastic elastomer, among which a polyurethane-based thermoplastic elastomer (TPU) is preferable. These thermoplastic elastomers may be used alone or in combination of two or more.

The polyurethane-based thermoplastic elastomer (TPU) is a linear multiblock copolymer containing (1) a polyurethane obtained by a reaction of an isocyanate and a short-chain glycol as a hard segment, and (2) a polyurethane obtained by a reaction of an isocyanate and a long-chain glycol as a soft segment. The polyurethane here is a generic name for compounds having a urethane bond (-NHCOO-) obtained by a polyaddition reaction (urethanization reaction) of isocyanate (-NCO) and alcohol (-OH). For the inner liner of this disclosure, when the thermoplastic elastomer forming the elastic layer is TPU, laminating the elastic layers can improve the extensibility and thermoformability. Furthermore, since the interlayer adhesiveness between the elastic layer and the gas barrier layer of such an inner liner is improved, the durability properties such as crack resistance are high, and the gas barrier properties and extensibility can be maintained even when the inner liner is deformed in using.

The TPU is composed of a high-molecular polyol, an organic polyisocyanate, a chain extender and other substances. The high-molecular polyol is a substance having a plurality of hydroxyl groups, and is obtained by, for example, polycondensation, addition polymerization (for example, ring-opening polymerization), or polyaddition. Examples of the high-molecular polyol include a polyester polyol, a polyether polyol, a polycarbonate polyol, and cocondensates thereof (for example, a polyester-ether-polyol). Among them, a polyester polyol or a polycarbonate polyol is preferable, and a polyester polyol is particularly preferable. These high-molecular polyols may be used alone or in combination of two or more.

The polyester polyol here can be produced, for example, with a conventional method of condensing a compound capable of forming an ester, such as a dicarboxylic acid, an ester thereof or an anhydride thereof, and a low-molecular polyol by a direct esterification reaction or a transesterification reaction, or ring-opening polymerizing a lactone.

The dicarboxylic acid that can be used for forming the polyester polyol is not particularly limited, and may be a dicarboxylic acid commonly used in the polyester production. Specific examples of the dicarboxylic acid include an aliphatic dicarboxylic acid having 4 to 12 carbon atoms such as succinic acid, glutaric acid, adipic acid, pimelic acid, suberic acid, azelaic acid, sebacic acid, dodecanedioic acid, methylsuccinic acid, 2-methylglutaric acid, trimethyladipic acid, 2-methyloctanedioic acid, 3,8-dimethyldecanedioic acid, and 3,7-dimethyldecanedioic acid; an alicyclic dicarboxylic acid such as cyclohexane dicarboxylic acid; and an aromatic dicarboxylic acid such as terephthalic acid, isophthalic acid, orthophthalic acid, and naphthalenedicarboxylic acid. These dicarboxylic acids may be used alone or in combination of two or more. Among them, an aliphatic dicarboxylic acid having 6 to 12 carbon atoms are preferable, and adipic acid, azelaic acid or sebacic acid is particularly preferable. These dicarboxylic acids have a carbonyl group that is more reactive with a hydroxyl group, and can significantly improve the interlayer adhesiveness to the gas barrier layer.

The low-molecular polyol that can be used for forming the polyester polyol is not particularly limited, and may be a low-molecular polyol commonly used in the polyester production. Specific examples of the low-molecular polyol include an aliphatic diol having 2 to 15 carbon atoms such as ethylene glycol, diethylene glycol, triethylene glycol, propylene glycol, 1,3-propanediol, 2-methyl-1,3-propanediol, 1,3-butylene glycol, 1,4-butanediol, neopentyl glycol, 1,5-pentanediol, 3-methyl-1,5-pentanediol, 1,6-hexanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, 1,10-decanediol, and 2,2-diethyl-1,3-propanediol; an alicyclic diol such as 1,4-cyclohexanediol, cyclohexane dimethanol, cyclooctane dimethanol, and dimethylcyclooctane dimethanol; and an aromatic dihydric alcohol such as 1,4-bis(β-hydroxyethoxy)benzene. These low-molecular polyols may be used alone or in combination of two or more. Among them, an aliphatic diol having a methyl group on the side chain and having 5 to 12 carbon atoms such as 3-methyl-1,5-pentanediol, 2-methyl-1,8-octanediol, 2,7-dimethyl-1,8-octanediol, 1,9-nonanediol, and 2,8-dimethyl-1,9-nonanediol is preferable. A polyester polyol obtained by using such an aliphatic diol is more reactive with a hydroxyl group, and can significantly improve the interlayer adhesiveness to the gas barrier layer. Furthermore, a small amount of trifunctional or higher functional low-molecular polyol can be used in combination with the low-molecular polyol. Examples of the trifunctional or higher functional low-molecular polyol include trimethylolpropane, trimethylolethane, glycerin, and 1,2,6-hexanetriol.

Examples of the lactone used for forming the polyester polyol include ε-caprolactone, and β-methyl-δ-valerolactone.

Examples of the polyether polyol include polyethylene glycol, polypropylene glycol, polytetramethylene glycol, and poly(methyltetramethylene)glycol. These polyether polyols may be used alone or in combination of two or more. Among them, polytetramethylene glycol is preferable.

Preferable examples of the polycarbonate polyol include a compound obtained by condensation polymerizing an aliphatic diol having 2 to 12 carbon atoms such as 1,4-butanediol, 1,5-pentanediol, 1,6-hexanediol, 1,8-octanediol, and 1,10-decanediol, or a mixture thereof with the action of, for example, diphenyl carbonate or phosgene.

The high-molecular polyol preferably has a number-average molecular weight of 500 or more, more preferably 600 or more, and even more preferably 700 or more. The high-molecular polyol preferably has a number-average molecular weight of 8,000 or less, more preferably 5,000 or less, and even more preferably 3,000 or less. When the high-molecular polyol has a number-average molecular weight of 500 or more, the elasticity of the resulting TPU is high, and the mechanical properties such as extensibility and the thermoformability of the inner liner are good. On the other hand, when the high-molecular polyol has a number-average molecular weight of 8,000 or less, the compatibility with the organic polyisocyanate is high and the mixing in the polymerization process is easy, by which a uniform TPU can be obtained. The number-average molecular weight of the high-molecular polyol is a number-average molecular weight calculated based on hydroxyl value as measured in accordance with JIS K 1577.

The organic polyisocyanate is not particularly limited, and a known organic polyisocyanate commonly used in the TPU production, such as an organic diisocyanate, can be used. Examples of the organic diisocyanate include an aromatic diisocyanate such as 4,4'-diphenylmethane diisocyanate, tolylene diisocyanate, phenylene diisocyanate, xylylene diisocyanate, 1,5-naphthylene diisocyanate, 3,3'-dichloro-4,4'-diphenylmethane diisocyanate, and toluylene diisocyanate; and an aliphatic or alicyclic diisocyanate such as hexamethylene diisocyanate, isophorone diisocyanate, 4,4'-dicyclohexylmethane diisocyanate, and hydrogenated xylylene diisocyanate. Among them, 4,4'-diphenylmethane diisocyanate is preferable from the perspective of improving the strength and flex resistance of the resulting inner liner. These organic polyisocyanates can be used alone or in combination of two or more.

The chain extender is not particularly limited. A known chain extender commonly used in the TPU production can be used, and a low-molecular compound having two or more active hydrogen atoms capable of reacting with an isocyanate group in the molecules and having a molecular weight of 300 or less is suitably used. Examples of the chain extender include ethylene glycol, propylene glycol, 1,4-butanediol, 1,6-hexanediol, 1,4-bis(β-hydroxyethoxy)benzene, and 1,4-cyclohexanediol. Among them, 1,4-butanediol is particularly preferable from the perspective of further improving the extensibility and thermoformability of the resulting inner liner. These chain extenders may be used alone or in combination of two or more.

Examples of the production method of the TPU include a production method using a high-molecular polyol, an organic polyisocyanate and a chain extender with known urethanization reaction techniques, and either a prepolymer method or a one-shot method may be used. In particular, it is preferable to perform melt polymerization substantially in the absence of a solvent, and more preferable to perform continuous melt polymerization using a multi-screw extruder.

For the TPU, the ratio of the mass of the organic polyisocyanate to the total mass of the high-molecule polyol and the chain extender, [organic polyisocyanate/(high-molecular polyol + chain extender)], is preferably 1.02 or less. When the ratio is 1.02 or less, the long-term operation stability during forming is also good.

On the other hand, the soft material has a Young's modulus at 23°C lower than that of the thermoplastic elastomer, preferably 1000 MPa or less, and more preferably in a range of 0.01 MPa to 500 MPa. Using a soft material having a Young's modulus at 23°C of 1000 MPa or less improves the crack resistance.

The soft material is preferably a compound having a functional group capable of reacting with a hydroxyl group. When the soft material has a functional group capable of reacting with a hydroxyl group, the soft material is uniformly dispersed in the thermoplastic elastomer and the average particle size of the soft material can also be reduced. Examples of the functional group capable of reacting with a hydroxyl group include a hydroxyl group, a carboxyl group, a carboxylate group, an isocyanate group, an isothiocyanate group, an epoxy group, an amino group, a boron-containing group, as well as a functional group introduced by modifying a compound selected from the group consisting of maleic acid, maleic anhydride and alkoxysilane. The functional group here is not limited to those capable of directly reacting with a thermoplastic elastomer molecule or those having a high affinity to a thermoplastic elastomer molecule. Examples of the functional group also include those capable of reacting with a thermoplastic elastomer molecule through a pre-reaction with other agents. The soft material may have two or more such functional groups.

The soft material is preferably a compound having a molecular weight of 10,000 or less, more preferably a compound having a molecular weight of 5,000 or less, even more preferably a compound having a molecular weight of 2,000 or less, and particularly preferably a compound having a molecular weight of 1,000 or less. When the molecular weight of the soft material is within the above ranges, the soft material is uniformly dispersed in the thermoplastic elastomer, and the film-forming properties of the composition containing the thermoplastic elastomer and the soft material can also be improved. The molecular weight of the soft material is preferably 750 or more from the perspective of strengthening the entanglement to the thermoplastic elastomer and improving the crack resistance. Note that the molecular weight of the soft material refers to a polystyrene-equivalent weight-average molecular weight measured by gel permeation chromatography (GPC) in a case where the soft material is a polymer.

In addition to a rubber such as a butadiene rubber (BR), an isoprene rubber (IR), a styrene-butadiene copolymer rubber (SBR), a natural rubber (NR), a butyl rubber (IIR), isobutylene-p-methylstyrene, a chlorosulfonated polyethylene rubber (CSM), an ethylene-propylene rubber (EPM, EPDM), an ethylene-butene rubber, an ethylene-octene rubber, a chloroprene rubber (CR), an acrylic rubber (ACM), a nitrile rubber (NBR) and a silicone rubber, their hydrogenated rubbers (for example, a hydrogenated SBR), modified rubbers (for example, a modified natural rubber, a brominated butyl rubber (Br-IIR), a chlorinated butyl rubber (Cl-IIR), or a brominated isobutylene-p-methylstyrene) and liquid rubbers (that is, a low molecular weight rubber), and other rubbers may also be used for the soft material particularly from the perspective of improving the crack resistance. Furthermore, in addition to a polymer such as a polyethylene (PE), a polypropylene (PP), an ethylene-butene copolymer, a styrene-ethylene-butene-styrene block copolymer (SEBS), a styrene-ethylene-propylene-styrene block copolymer (SEPS), a styrene-isobutylene-chloromethylstyrene block copolymer and a polyamide, their hydrogenated products and modified products, and other substances may also be used for the soft material from the same perspective. Specific examples include a maleic anhydride-modified hydrogenated styrene-ethylene-butadiene-styrene block copolymer, and a maleic anhydride-modified ultra-low-density polyethylene. These soft materials may be used alone or in combination of two or more.

From the perspective of obtaining an excellent compatibility with the thermoplastic elastomer and lowering the glass transition point (Tg), a known plasticizer may be used as the soft material. Examples of the plasticizer include a phthalic acid-based plasticizer such as dibutyl phthalate, diheptyl phthalate, dioctyl phthalate (DOP), ditridecyl phthalate, and trioctyl phthalate; a phosphoric acid-based plasticizer such as tricresyl phosphate, and trioctyl phosphate; a fatty acid-based plasticizer such as tributyl citrate, dioctyl adipate, dioctyl sebacate, and methyl acetyl ricinoleate; an epoxy-based plasticizer such as epoxidized soybean oil, and diisodecyl-4,5-epoxytetrahydrophthalate; an amide-based plasticizer such as N-butylbenzenesulfonamide; as well as a chlorinated paraffin and a sunflower oil suitable for diene-based elastomer. These soft materials may be used alone or in combination of two or more.

The content of the soft material in the elastic layer is preferably 10 mass% to 30 mass%. When the content of the soft material is 10 mass% or more, the crack resistance can be sufficiently improved and the low temperature hardness of the elastic layer can be sufficiently reduced. When the content of the soft material is 30 mass% or less, the film-forming properties can be sufficiently improved.

In addition to the aforementioned thermoplastic elastomer and soft material, additives such as a thermal stabilizer, an ultraviolet absorbing agent, an antioxidant, a colorant, and a filler may be appropriately selected and added to the composition used for the elastic layer, to the extent that the object of this disclosure is not impaired. The content of these additives in the composition used for the elastic layer is preferably 50 mass% or less, more preferably 30 mass% or less, and even more preferably 10 mass% or less.

The air permeability of the elastic layer at 20°C and 65% RH is preferably 3.0 × 10⁻⁸ cm³·cm/cm²·sec·cmHg or less. The air permeability is measured in accordance with JIS K7126-1:2006 (an equal pressure method).

The average thickness of one layer of the elastic layer is preferably 0.001 µm to 40 µm. When the average thickness of one layer of the elastic layer is within this range, the number of layers constituting the inner liner can be increased. An inner liner with more layers has improved gas barrier properties and crack resistance as compared with an inner liner with the same overall thickness but fewer layers.

Regarding the average thickness of one layer of the elastic layer, the ratio of the average thickness of one layer of the elastic layer to the average thickness of one layer of the gas barrier layer (elastic layer/gas barrier layer) is preferably 2/1 (= 2) or more, and more preferably 3/1 (= 3) or more. With such a ratio of the thicknesses of the gas barrier layer and the elastic layer, the flex fatigue properties leading to the breaking of all layers in the film layer are improved.

When the film layer of the inner liner of a pneumatic tire of this disclosure has the gas barrier layer and the elastic layer, the total number of layers of the gas barrier layer and the elastic layer is preferably 7 or more. With such a film layer, it is possible to suppress the propagation of defects such as a pinhole or a crack initiated in one layer to an adjacent layer, so that cracks and fractures over the entire film layer can be prevented and the durability properties such as gas barrier properties and crack resistance can be maintained at a high level.

In order to further exert these effects, the gas barrier layer and the elastic layer are preferably alternately laminated, and the surface of the film layer is preferably formed by the elastic layer. It is also preferable that the surface of the film layer is formed by the gas barrier layer. Therefore, the number of layers of the gas barrier layer is preferably 3 or more, and the number of layers of the elastic layer is preferably 4 or more. From the perspective of sufficiently maintaining the gas barrier properties and crack resistance of the inner liner, the total number of layers of the gas barrier layer and the elastic layer is preferably 7 or more, more preferably 11 or more, and even more preferably 15 layers or more. The upper limit of the total number of layers of the gas barrier layer and the elastic layer is not particularly restricted.

The thickness of the film layer is preferably 0.1 µm or more and 1,000 µm or less, more preferably 0.5 µm or more and 750 µm or less, further preferably 1 µm or more and 500 µm or less, and even more preferably 1 µm or more and 150 µm or less. By setting the thickness of the film layer within the aforementioned ranges and setting the average thickness of one layer of the gas barrier layer and the elastic layer within the aforementioned ranges, the gas barrier properties, flex resistance, crack resistance, durability, extensibility and other properties can be further improved. The thickness of the film layer can be obtained by measuring the thickness of a cross section at an arbitrarily selected point of the film layer.

The adhesion layer of the inner liner of a pneumatic tire of this disclosure contains at least a polystyrene-based thermoplastic elastomer. The adhesion layer may contain another component in addition to a polystyrene-based thermoplastic elastomer, and may consist of only a polystyrene-based thermoplastic elastomer. When the adhesion layer contains at least a polystyrene-based thermoplastic elastomer, the adhesiveness of the adhesion layer is not excessively high and the operability is good.

The polystyrene-based thermoplastic elastomer has an aromatic vinyl-based polymer block (hard segment) and a rubber block (soft segment), where the aromatic vinyl-based polymer part forms a physical crosslink to provide a crosslinking point, and the rubber block provides rubber elasticity. The polystyrene-based thermoplastic elastomer can be divided according to the arrangement manner of soft segment in a molecule. Examples of the polystyrene-based thermoplastic elastomer include a styrene-butadiene-styrene block copolymer (SBS), a styrene-isoprene-styrene block copolymer (SIS), a styrene-isobutylene-styrene block copolymer (SIBS), a styrene-ethylene-butene-styrene block copolymer (SEBS), and a styrene-ethylene-propylene-styrene block copolymer (SEPS), and further includes a block copolymer of ethylene-butylene-styrene random copolymer and crystalline polyethylene obtained by hydrogenating a block copolymer of butadiene-styrene random copolymer and polybutadiene, and, for example, a diblock copolymer of polystyrene and crystalline polyethylene obtained by hydrogenating a block copolymer of polystyrene and ethylene-butadiene random copolymer or polybutadiene. Among them, a styrene-isobutylene-styrene block copolymer (SIBS), a styrene-butadiene-styrene block copolymer (SBS), or a styrene-isoprene-styrene block copolymer (SIS) is preferable in view of the balance among the mechanical strength, heat-resistant stability, weather resistance, chemical resistance, gas barrier properties, flexibility, processability, and other properties.

For the inner liner of a pneumatic tire of this disclosure, the styrene content of the polystyrene-based thermoplastic elastomer is 40 mass% to 55 mass%, and preferably 40 mass% to 48 mass%. When the styrene content of the polystyrene-based thermoplastic elastomer used for the adhesion layer is less than 40 mass%, the adhesive strength to a rubber member is weak and the operability during the vulcanization of an inner liner-incorporated green tire is poor. On the other hand, when the styrene content exceeds 55 mass%, curing may occur in a low temperature environment and the adhesion layer may break when the inner liner-incorporated tire is subjected to running.

The average thickness of one layer of the adhesion layer is preferably 0.001 µm to 40 µm. When the average thickness of one layer of the adhesion layer is 0.001 µm or more, the adhesiveness to an adjacent rubber member can be further improved. When the average thickness is 40 µm or less, an unnecessary increase in weight can be avoided.

Additives such as a metal salt, a radical crosslinking agent, a phosphoric acid compound, a carboxylic acid and a boron compound can be appropriately selected and added to the composition used for at least one of the gas barrier layer and the elastic layer as well as the composition used for the adhesion layer, to the extent that the object of this disclosure is not impaired.

Containing a metal salt in the raw material composition used for the gas barrier layer, elastic layer and adhesion layer produces extremely excellent interlayer adhesiveness. With such extremely excellent interlayer adhesiveness, the inner liner obtains high durability. The reason why the metal salt improves the interlayer adhesiveness is not necessarily clarified.

A possible reason may be, for example, that the bond-forming reaction between, for example, the thermoplastic resin and, for example, the thermoplastic elastomer in the raw material composition is accelerated because of the presence of the metal salt. Examples of such a bond-forming reaction include a hydroxyl group exchange reaction between a carbamate group of a polyurethane-based thermoplastic elastomer (TPU) and a hydroxyl group of an ethylene-vinyl alcohol copolymer (EVOH), and an addition reaction of a hydroxyl group of an ethylene-vinyl alcohol copolymer (EVOH) to a residual isocyanate group in a polyurethane-based thermoplastic elastomer (TPU).

The metal salt is not particularly limited, yet an alkali metal salt, an alkaline earth metal salt, or a d-block metal salt in period 4 of the periodic table is preferable from the perspective of further enhancing the interlayer adhesiveness. Among them, an alkali metal salt or an alkaline earth metal salt is more preferable, and an alkali metal salt is particularly preferable.

Examples of the alkali metal salt include an aliphatic carboxylate, an aromatic carboxylate, a phosphate, a metal complex and other salts of lithium, sodium, potassium and other elements. Specific examples of the alkali metal salt include sodium acetate, potassium acetate, sodium phosphate, lithium phosphate, sodium stearate, potassium stearate, and a sodium salt of ethylenediaminetetraacetic acid. Among them, sodium acetate, potassium acetate, sodium phosphate are particularly preferable in view of easy availability.

Examples of the alkaline earth metal salt include acetate or phosphate of magnesium, calcium, barium, beryllium and other elements. Among them, acetate or phosphate of magnesium or calcium is particularly preferable in view of easy availability. Containing such an alkaline earth metal salt also has an advantage that the attachment amount of thermally aged resin and thermoplastic elastomer to the die of a forming machine during melt forming can be reduced.

Examples of the metal salt of d-block metal in period 4 of the periodic table include a carboxylate, a phosphate, an acetylacetonate salt or other salts of titanium, vanadium, chromium, manganese, iron, cobalt, nickel, copper, zinc and other elements.

The content of the metal salt in the raw material composition is preferably 1 mass ppm or more, more preferably 5 mass ppm or more, further preferably 10 mass ppm or more, even more preferably 20 mass ppm or more, and particularly preferably 50 mass ppm or more in terms of the metal element. The content of the metal salt in the raw material composition is preferably 10,000 mass ppm or less, more preferably 5,000 mass ppm or less, further preferably 1,000 mass ppm or less, even more preferably 500 mass ppm or less, and particularly preferably 300 mass ppm or less in terms of the metal element. When the content of the metal salt in the raw material composition is 1 mass ppm to 10,000 mass ppm in terms of the metal element, the adhesiveness to an adjacent other layer is further enhanced, so that the gas barrier properties and flex resistance can be further improved.

In a case where the raw material composition contains a radical crosslinking agent, the crosslinking effect upon irradiation with active energy rays is accelerated by irradiating a layer made of the composition with active energy rays, which further improves the interlayer adhesiveness and further enhances the gas barrier properties. In this case, it is also possible to reduce the irradiation dose of active energy rays as compared with a case where no radical crosslinking agent is contained.

Examples of the radical crosslinking agent include poly (meth) acrylate of polyhydric alcohol such as trimethylolpropane trimethacrylate, diethylene glycol diacrylate and neophenylene glycol diacrylate, triallyl isocyanurate, and triallyl cyanurate. These radical crosslinking agents may be used alone or in combination of two or more.

The content of the radical crosslinking agent in the raw material composition is preferably in a range of 0.01 mass% to 10 mass%, more preferably in a range of 0.05 mass% to 9 mass%, and particularly preferably in a range of 0.1 mass% to 8 mass% from the perspective of the balance between the crosslinking effect and economical efficiency.

The method of including the radical crosslinking agent in the raw material composition is not particularly limited, and may be, for example, a method of melt kneading the raw material composition using, for example, a twin screw extruder.

When the raw material composition contains a phosphoric acid compound, the thermal stability of the film layer and the adhesion layer during melt forming can be improved. Examples of the phosphoric acid compound include various acids such as phosphoric acid and phosphorous acid and salts thereof. A phosphate may be contained, for example, in any form of a primary phosphate, a secondary phosphate, or a tertiary phosphate. A counter cation species thereof is not particularly limited, either, yet an alkali metal ion or an alkaline earth metal ion is preferable. In particular, sodium dihydrogenphosphate, potassium dihydrogenphosphate, sodium hydrogenphosphate or potassium hydrogenphosphate is preferable because they highly improve the thermal stability.

The content of the phosphoric acid compound (the content of the phosphoric acid compound in a dried raw material composition in terms of phosphate radical) is preferably 1 mass ppm or more, more preferably 10 mass ppm or more, and even more preferably 30 mass ppm or more. The content of the phosphoric acid compound is preferably 10,000 mass ppm or less, more preferably 1,000 mass ppm or less, and even more preferably 300 mass ppm or less. A phosphoric acid compound content less than 1 mass ppm may lead to occurrence of severe coloring during melt forming. In particular, this tendency is remarkable when the heat history is repeated. As a result, the formed product obtained by molding composition pellets may have poor recoverability. On the other hand, a phosphoric acid compound content exceeding 10,000 mass ppm may lead to generation of more gels and hard spots during forming.

Containing a carboxylic acid in the raw material composition has effects of controlling the pH of the composition, preventing gelation and improving the thermal stability. The carboxylic acid is preferably acetic acid or lactic acid in view of, for example, costs.

The content of the carboxylic acid (the content of the carboxylic acid in a dried raw material composition) is preferably 1 mass ppm or more, more preferably 10 mass ppm or more, and even more preferably 50 mass ppm or more. The content of the carboxylic acid is preferably 10,000 mass ppm or less, more preferably 1,000 mass ppm or less, and even more preferably 500 mass ppm or less. When the content of the carboxylic acid is less than 1 mass ppm, coloring may occur during melt forming. When the content of carboxylic acid is 10,000 mass ppm or less, good interlayer adhesiveness can be obtained.

Containing a boron compound in the raw material composition has an effect of improving the thermal stability. Specifically, when a boron compound is added to the raw material composition, it is considered that a chelate compound forms between the thermoplastic resin or thermoplastic elastomer and the boron compound, and using such a thermoplastic resin or thermoplastic elastomer can lead to improved thermal stability and enhanced mechanical properties as compared with the case of using an ordinary thermoplastic resin or thermoplastic elastomer. Examples of the boron compound include boric acids, boric acid esters, borates, and hydrogenated boric acids. Specifically, examples of the boric acids include orthoboric acid (H₃BO₃), metaboric acid, and tetraboric acid; examples of the boric acid esters include triethyl borate, and trimethyl borate; and examples of the borates include alkali metal salts, alkaline earth metal salts and borax of the aforementioned various boric acids. Among them, orthoboric acid is preferable.

The content of the boron compound (the content of the boron compound in a dried raw material composition in terms of boron) is preferably 1 mass ppm or more, more preferably 10 mass ppm or more, and even more preferably 50 mass ppm or more. The content of the boron compound is preferably 2,000 mass ppm or less, more preferably 1,000 mass ppm or less, and even more preferably 500 mass ppm or less. When the content of the boron compound is less than 1 mass ppm, the effect of improving the thermal stability by adding the boron compound may not be obtained. On the other hand, when the content of the boron compound exceeds 2,000 mass ppm, gelation is likely to occur, which may lead to defective formings.

The method of including the metal salt, phosphoric acid compound, carboxylic acid, and boron compound in the raw material composition is not particularly limited, and a method, for example, where the additive is added to the composition and kneaded during the preparation of, for example, pellets of the composition is suitably adopted. The method of adding the additive to the raw material composition is not particularly limited, either. Examples thereof include a method of adding the additive as a dry powder, a method of impregnating the additive with a solvent and adding the additive in a paste form, a method of adding the additive as it is suspended in a liquid, and a method of dissolving the additive in a solvent and adding the additive as a solution. Among them, the method of dissolving the additive in a solvent and adding the additive as a solution is preferable from the perspective of homogeneously dispersing. The solvent used in these methods is not particularly limited, and water is suitably used from the perspective of, for example, the solubility of the additive, costs, ease of handling, and completeness of the working environment.

The method of including the metal salt, phosphoric acid compound, carboxylic acid and boron compound is also preferably, from the perspective of homogeneously dispersing, a method of immersing a pellet or strand of the raw material composition in a solution where these substances are dissolved. The solvent used in this method is also preferably water for the same reason as described above.

The raw material composition preferably contains a compound having a conjugated double bond and having a molecular weight of 1,000 or less. Containing such a compound improves the hue of the composition, so that a film layer with a good appearance can be obtained. Examples of such a compound include a conjugated diene compound having a structure where at least two carbon-carbon double bonds and one carbon-carbon single bond are alternately connected, a triene compound having a structure where three carbon-carbon double bonds and two carbon-carbon single bonds are alternately connected, a conjugated polyene compound having a structure where more carbon-carbon double bonds and carbon-carbon single bonds are alternately connected, and a conjugated triene compound such as 2,4,6-octatriene. The compound having a conjugated double bond may have plural independent pairs of conjugated double bonds in one molecule, and may be, for example, a compound having three conjugated trienes in the same molecule such as tung oil.

The compound having a conjugated double bond may have various functional groups such as a carboxyl group and a salt thereof, a hydroxyl group, an ester group, a carbonyl group, an ether group, an amino group, an imino group, an amide group, a cyano group, a diazo group, a nitro group, a sulfone group, a sulfoxide group, a sulfide group, a thiol group, a sulfonic acid group and a salt thereof, a phosphoric acid group and a salt thereof, a phenyl group, a halogen atom, a double bond, a triple bond and other functional groups. Such a functional group may be directly bonded to the carbon atom in the conjugated double bond, and may be bonded to a position distant from the conjugated double bond. The multiple bond in the functional group may be at a position capable of conjugating with the conjugated double bond. The compound having a conjugated double bond here may be, for example, 1-phenylbutadiene having a phenyl group, or sorbic acid having a carboxy group. Specific examples of the compound include 2,4-diphenyl-4-methyl-1-pentene, 1,3-diphenyl-1-butene, 2,3-dimethyl-1,3-butadiene, 4-methyl-1,3-pentadiene, 1-phenyl-1,3-butadiene, sorbic acid, and myrcene.

The conjugated double bond in the compound having a conjugated double bond is not limited to a conjugated double bond of aliphatic groups such as 2,3-dimethyl-1,3-butadiene and sorbic acid, and may be a conjugated double bond of an aliphatic group and an aromatic group such as 2,4-diphenyl-4-methyl-1-pentene and 1,3-diphenyl-1-butene. However, from the perspective of obtaining a film layer with more excellent appearance, a compound containing a conjugated double bond of aliphatic groups is preferable, and a compound containing a conjugated double bond having a polar group such as a hydroxyl group and a carboxy group and a salt thereof is also preferable. A compound having a polar group and containing a conjugated double bond of aliphatic groups is particularly preferable.

The molecular weight of the compound having a conjugated double bond is preferably 1,000 or less. When the molecular weight exceeds 1,000, the surface smoothness, extrusion stability and other properties of the film layer may be deteriorated. The content of the compound having a conjugated double bond and having a molecular weight of 1,000 or less is preferably 0.1 mass ppm or more, more preferably 1 mass ppm or more, even more preferably 3 mass ppm or more, and particularly preferably 5 mass ppm or more in view of the resulting effect. The content of the compound is preferably 3,000 mass ppm or less, more preferably 2,000 mass ppm or less, even more preferably 1,500 mass ppm or less, and particularly preferably 1,000 mass ppm or less in view of the resulting effect.

The method of adding the compound having a conjugated double bond is not particularly limited. In a case where the compound having a conjugated double bond is added to the resin composition for the gas barrier layer, however, it is preferable to add the compound after the polymerizing and before the saponification of the thermoplastic resin from the perspective of improving the surface smoothness and extrusion stability. The reason is not necessarily clarified. A possible reason may be that the compound having a conjugated double bond has an effect of preventing the deterioration of the thermoplastic resin before the saponification and/or during the saponification reaction.

For the inner liner of a pneumatic tire of this disclosure, the peeling resistance between adjacent layers (for example, gas barrier layers, elastic layers, a gas barrier layer and an elastic layer, a gas barrier layer and an adhesion layer, or an elastic layer and an adhesion layer) is preferably 25 N/25 mm or more, more preferably 27 N/25 mm or more, and even more preferably 30 N/25 mm or more from the perspective of interlayer adhesiveness. The peeling resistance here is a value measured in accordance with JIS K 6854 by a T-type peeling test in an atmosphere of 50% RH at 23°C and with a pulling rate of 50 mm/min.

The method of producing the inner liner is not particularly limited as long as it is a method by which the film layer and the adhesion layer can be laminated and adhered satisfactorily. Examples thereof include a well-known method such as co-extrusion, lamination, coating, bonding and adhesion. Specific examples of the method of producing the inner liner of this disclosure include:
(1) a method where a raw material for a gas barrier layer containing at least a thermoplastic resin and a raw material for an adhesion layer containing at least a polystyrene-based thermoplastic elastomer are prepared, a raw material for an elastic layer containing at least a thermoplastic elastomer is further prepared as required, and an inner liner having a gas barrier layer and an adhesion layer, or, as required, an inner liner having a gas barrier layer, an elastic layer and an adhesion layer is produced by a multilayer co-extrusion method using these raw materials; and
(2) a method where a raw material for a gas barrier layer containing at least a thermoplastic resin and a raw material for an adhesion layer containing at least a polystyrene-based thermoplastic elastomer are prepared, a raw material for an elastic layer containing at least a thermoplastic elastomer is further prepared as required, a plurality of laminated bodies are produced using these raw materials, and subsequently the plurality of laminated bodies are superimposed using, for example, an adhesive and stretched to produce an inner liner having a gas barrier layer and an adhesion layer, or, as required, an inner liner having a gas barrier layer, an elastic layer and an adhesion layer. Among them, the method (1) is preferable from the perspective of high productivity and excellent interlayer adhesiveness.

In the multilayer co-extrusion method, the raw material for forming a gas barrier layer, the raw material for forming an adhesion layer, and, as required, the raw material for forming an elastic layer are heated and melted, supplied to an extrusion die from different extruders or pumps through respective flow channels, extruded into multiple layers by the extrusion die, and then the layers are laminated and adhered to form an inner liner. For example, a multi-manifold die, a field block, or a static mixer may be used as the extrusion die.

For the inner liner of this disclosure, it is preferable to irradiate the inner liner thus obtained with active energy rays to accelerate the crosslinking reaction and further improve the interlayer adhesiveness between the film layer and the adhesion layer. Irradiating the inner liner with active energy rays enhances the adhesiveness between the layers. Furthermore, irradiating the inner liner with active energy rays improves the shape retaining properties of each layer of the inner liner in the vulcanization process during the tire production, and solves the problem of adhesion to a bladder when the inner liner is peeled off from the bladder.

The active energy rays refers to those having an energy quantum in an electromagnetic wave or a charged particle beam, specifically referring to, for example, ultraviolet rays, γ rays, and electron beams. Among these active energy rays, electron beams are preferable from the perspective of the effect of improving the interlayer adhesiveness. Using electron beams as the active energy rays accelerates the interlayer crosslinking reaction, which further improves the interlayer adhesiveness of the inner liner.

In the case of irradiating electron beams, it is preferable to use various kinds of electron beam accelerators as the source of electron beams such as a Cockcroft-Walton accelerator, a van de Graaff accelerator, a resonance transformer accelerator, an insulated core transformer accelerator, a linear accelerator, a Dynamitron accelerator or a high frequency accelerator, and to irradiate with an normal accelerating voltage of 100 kV to 500 kV and an irradiation dose in a range of 5 kGy to 600 kGy.

In the case of using ultraviolet rays as the active energy rays, it is preferable to use one containing ultraviolet rays with a wavelength of 190 nm to 380 nm. The source of ultraviolet rays is not particularly limited, and examples thereof include a high pressure mercury vapor lamp, a low pressure mercury vapor lamp, a metal halide lamp, and a carbon arc lamp.

### <Pneumatic Tire>

Next, the pneumatic tire of this disclosure will be illustrated and described in detail based on an embodiment thereof.

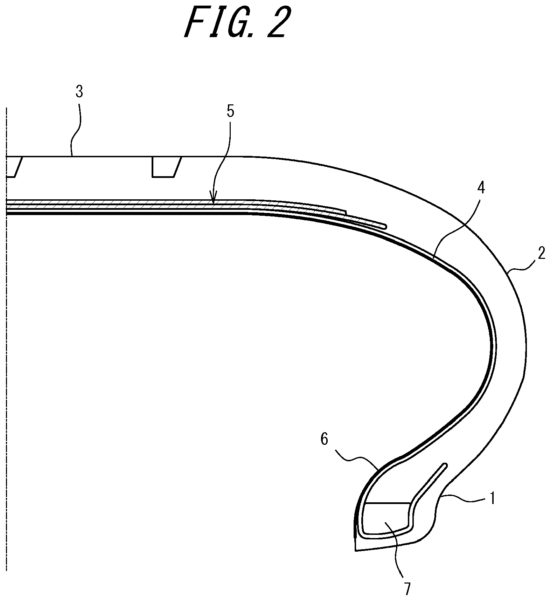

FIG. 2 is a partial cross-sectional view of an example of the pneumatic tire of this disclosure. The tire illustrated in FIG. 2 has a pair of bead portions 1, a pair of sidewall portions 2 and a tread portion 3 connected to the two sidewall portions 2. The tire also includes a carcass 4 extending in a toroidal shape between the pair of bead portions 1 for reinforcing the bead portions 1, the sidewall portions 2 and the tread portion 3, and a belt 5 formed of two belt layers disposed on the outer side in the tire radial direction of the crown portion of the carcass 4, where an inner liner 6 is further disposed on the tire inner surface on the inner side of the carcass 4.

The pneumatic tire of this disclosure includes the inner liner of a pneumatic tire of this disclosure as described above as the inner liner 6. The pneumatic tire of this disclosure uses the inner liner having high adhesiveness to an adjacent rubber member as described above, so that the inner liner 6 hardly peels off and the internal pressure retention is high.

In the tire illustrated in FIG. 2, the carcass 4 is formed of a single carcass ply, and includes a main body extending in a toroidal shape between a pair of bead cores 7 embedded in each of the bead portions 1 and a turn-up portion wound around each bead core 7 from the inner side toward the outer side in the tire width direction then toward the outer side in the tire radial direction. The number of plies and the structure of the carcass 4, however, are not limited to those in the aforementioned example for the pneumatic tire of this disclosure.

Furthermore, although the belt 5 in the tire illustrated in FIG. 2 is formed of two belt layers, the number of belt layers constituting the belt 5 is not limited to that in the aforementioned example for the pneumatic tire of this disclosure.

The tread portion, sidewall portion, bead portion and other portions of the pneumatic tire of this disclosure can appropriately apply a material, shape, and arrangement that are used for the corresponding portion of an ordinary tire. The tire may be filled with ordinary air or air adjusted in partial pressure of oxygen, and may also be filled with an inert gas such as nitrogen, argon, or helium.

For the pneumatic tire of this disclosure, it is preferable that the inner liner is extended in the tire circumferential direction and the end portions of the inner liner in the tire circumferential direction are arranged to overlap each other in the tire radial direction on the tire inner surface, where both the end portions of the inner liner in the tire circumferential direction are parallel to the tire width direction, and the overlapping width of the end portions of the inner liner in the tire circumferential direction is in a range of 5 mm to 20 mm. In a case where both the end portions of the inner liner in the tire circumferential direction are parallel to the tire width direction, setting the overlapping width in the range of 5 mm to 20 mm can suppress the peeling of the joint after subjecting the tire to running.

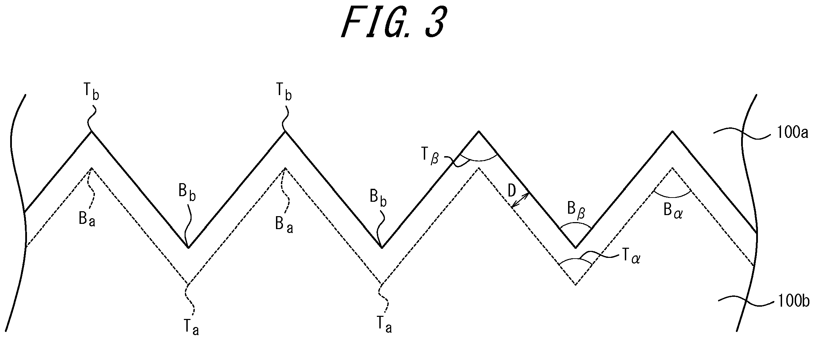

Furthermore, for the pneumatic tire of this disclosure, it is preferable that the inner liner is extended in the tire circumferential direction and the end portions of the inner liner in the tire circumferential direction are arranged to overlap each other in the tire radial direction on the tire inner surface, where the end portion of the inner liner alternately has a peak portion and a valley portion, as illustrated in FIG. 3. When the end portion of the inner liner alternately has a peak portion and a valley portion (that is, the end portion is in a so-called "jagged" shape), the shear stress applied to the joint of the end portions is dispersed and reduced, and the peeling of the joint during the forming of a green tire and the peeling of the joint after subjecting the tire to running can be suppressed.

FIG. 3 is a partial cross-sectional view of the joint of the inner liner end portions of an example of the pneumatic tire of this disclosure, as seen from the tire inner surface. In the overlapping part of the inner liner end portions illustrated in FIG. 3, one end portion (indicated by a dotted line in FIG. 3) 100a of the inner liner located on the outer side in the tire radial direction is covered with the other end portion 100b of the inner liner located on the inner side in the tire radial direction (that is, the innermost surface of the tire), where the one end portion 100a of the inner liner alternately has a peak portion Tₐ and a valley portion Bₐ, and the other end portion 100b of the inner liner alternately has a peak portion T_{b} and a valley portion B_{b}. In FIG. 3, the cutting face of the end portions 100a and 100b of the inner liner in the tire circumferential direction extends along the tire width direction overall. For the pneumatic tire of this disclosure, however, the cutting face of the end portion of the inner liner in the tire circumferential direction may be inclined with respect to the tire width direction.

In FIG. 3, the peak portion Tₐ of one end portion 100a of the inner liner and the valley portion B_{b} of the other end portion 100b of the inner liner are disposed close to each other, and the valley portion Bₐ of one end portion 100a of the inner liner and the peak portion T_{b} of the other end portion 100b of the inner liner are disposed close to each other.

In FIG. 3, the cutting face of each of the peak portion Tₐ and valley portion Bₐ of one end portion 100a of the inner liner and the peak portion T_{b} and valley portion B_{b} of the other end portion 100b of the inner liner are formed by two planes, where each of the angle T_{α} of the top of the peak portion Tₐ, the angle T_{β} of the top of the peak portion T_{b}, the angle B_{α} of the bottom of the valley portion Bₐ, and the angle B_{β} of the bottom of the valley portion B_{b} formed by the intersection of the two planes is preferably in a range of 45° to 120°. When the angle of the top of the peak portion and the angle of the bottom of the valley portion are 45° or more, the top of the peak portion and the bottom of the valley portion are not sharp, so that the peeling of the joint during the forming of a green tire or after subjecting the tire to running can be further suppressed. When the angle of the top of the peak portion and the angle of the bottom of the valley portion are 120° or less, the peeling of the joint after subjecting the tire to running can be further suppressed.

In FIG. 3, the overlapping width D of the end portions 100a and 100b of the inner liner in the tire circumferential direction is preferably in a range of 1 mm to 13 mm. When the overlapping width D is 1 mm or more, the peeling of the joint during the forming of a green tire can be further suppressed. When the overlapping width D is 13 mm or less, the peeling of the joint after subjecting the tire to running can be further suppressed.

The pneumatic tire of this disclosure preferably includes a rubber-like elastic body layer with a thickness of 0.1 mm to 1.0 mm, and more preferably a rubber-like elastic body layer with a thickness of 0.2 mm to 0.6 mm on the outer side in the tire radial direction of the inner liner. Disposing a rubber-like elastic body layer with a thickness of 0.1 mm to 1.0 mm on the outer side in the tire radial direction of the inner liner can improve the peeling resistance between the end portions of the inner liner while suppressing the occurrence of cracks in the inner liner. When the thickness of the rubber-like elastic body layer is 0.2 mm to 0.6 mm, it is possible to further improve the peeling resistance between the end portions of the inner liner while further suppressing the occurrence of cracks in the inner liner.

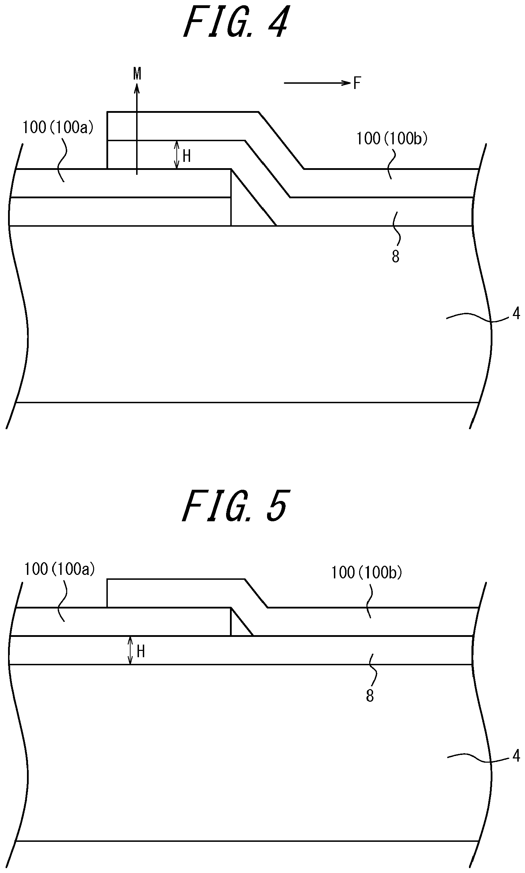

FIG. 4 is a partial cross-sectional view of the joint of the inner liner end portions of an example of the pneumatic tire of this disclosure, as seen from the tire width direction. Laminating a rubber-like elastic body layer with a thickness of 0.1 mm or more to the inner liner can suppress the occurrence of cracks in the inner liner. However, in a case as illustrated in FIG. 4 where a composite body, in which a rubber-like elastic body layer 8 is laminated on the inner liner 100, is prepared in advance and the composite body is extended in the tire circumferential direction on the tire inner surface, the peeling resistance between the end portions of the composite body may decrease because of a moment M generated by the shear stress in the direction perpendicular to the expansion force F of the tire due to the thickness H of the rubber-like elastic body layer 8 at the overlapping part of the end portions of the composite body. On the other hand, by setting the thickness H of the rubber-like elastic body layer 8 to 1.0 mm or less, it is possible to reduce the moment M generated by the shear stress in the direction perpendicular to the expansion force F of the tire and to improve the peeling resistance between the end portions of the inner liner 100.

For the pneumatic tire of this disclosure, it is preferable that the inner liner is extended in the tire circumferential direction and the end portions of the inner liner in the tire circumferential direction are arranged to overlap and contact each other in the tire radial direction on the tire inner surface, and a rubber-like elastic body layer with a thickness of 0.1 mm to 1.0 mm is further provided on the outer side in the tire radial direction of the overlapping part of the end portions of the inner liner in the tire circumferential direction; it is more preferable that the thickness of the rubber-like elastic body layer is 0.2 mm to 0.6 mm.

FIG. 5 is a partial cross-sectional view of the joint of the inner liner end portions of another example of the pneumatic tire of this disclosure, as seen from the tire width direction. FIG. 5 illustrates the overlapping part of the end portions 100a and 100b of the inner liner, where one end portion 100a of the inner liner located on the outer side in the tire radial direction is covered with the other end portion 100b of the inner liner located on the inner side in the tire radial direction (that is, the innermost surface of the tire), and a rubber-like elastic body layer 8 is disposed on the outer side in the tire radial direction of the overlapping part of the end portions 100a and 100b of the inner liner. In this case, the one end portion 100a of the inner liner overlaps the other end portion 100b of the inner liner in the tire radial direction and forms a joint, and at the joint, for example, one end portion and the other end portion of the inner liner (that is, gas barrier layer + elastic layer + adhesion layer) are adhered via a rubber-like elastic body layer, or, the two end portions of the inner liner are arranged to directly contact each other. The thickness H of the rubber-like elastic body layer 8 is preferably in a range of 0.1 mm to 1 mm, and more preferably in a range of 0.2 mm to 0.6 mm. When the thickness H of the rubber-like elastic body layer 8 is in the above ranges, it is possible to relax the stress generated in the gas barrier layer constituting the inner liner while maintaining the followability to the carcass at -20°C, thereby suppressing the occurrence of cracks and breaking of the gas barrier layer. This can also suppress the propagation of breakage and cracks even if the gas barrier layer breaks or cracks occur.

As described above, laminating a rubber-like elastic body layer on the inner liner can suppress the occurrence of cracks in the inner liner; however, in a case as illustrated in FIG. 4 where a composite body, in which a rubber-like elastic body layer is laminated on the inner liner, is prepared in advance and the composite body is extended in the tire circumferential direction on the tire inner surface, the peeling resistance between the end portions of the composite body may decrease because of a moment M generated by the shear stress in the direction perpendicular to the expansion force F of the tire due to the thickness H of the rubber-like elastic body layer 8 at the overlapping part of the end portions of the composite body.

On the other hand, in a case as illustrated in FIG. 5 where a rubber-like elastic body layer is laminated to the inner liner in advance so that only the inner liner 100 is extended in the tire circumferential direction on the tire inner surface and the rubber-like elastic body layer 8 is separately arranged on the outer side in the tire radial direction of the overlapping part of the end portions 100a and 100b of the inner liner in the tire circumferential direction, there is no rubber-like elastic body layer 8 between the end portions 100a and 100b of the inner liner at the overlapping part of the end portions 100a and 100b of the inner liner in the tire circumferential direction. In this way, it is possible to further reduce the moment M generated by the shear stress in the direction perpendicular to the expansion force F of the tire and to further improve the peeling resistance between the end portions 100a and 100b of the inner liner. When the thickness H of the rubber-like elastic body layer 8 is 0.1 mm or more, the occurrence of cracks in the inner liner can be suppressed. When the thickness H is 1.0 mm or less, an increase in the tire weight can be suppressed.

The dynamic storage modulus E' of the rubber-like elastic body layer 8 at -20°C is preferably 1.0 × 10⁵ Pa to 1.0 × 10⁷ Pa, more preferably 1.0 × 10⁵ Pa to 1.0 × 10⁶ Pa, and even more preferably 1.0 × 10⁵ Pa to 5.0 × 10⁵ Pa. When the dynamic storage modulus E' is 1.0 × 10⁵ Pa or more, it is possible to sufficiently ensure the operability during the kneading of the rubber composition used for the rubber-like elastic body layer 8. When the dynamic storage modulus E' is 1.0 × 10⁷ Pa or less, the deformation of the carcass can be relaxed, the deformation of the gas barrier layer is suppressed, and the crack resistance in a low temperature environment is improved.

The rubber component of the rubber composition used for the rubber-like elastic body layer 8 is not particularly limited, and for example, a diene-based rubber may be used. Specific examples of the diene-based rubber include a natural rubber (NR), an isoprene rubber (IR), a cis-1,4-polybutadiene rubber (BR), a syndiotactic-1,2-polybutadiene rubber (1,2BR), and a styrene-butadiene copolymer rubber (SBR). These diene-based rubbers may be used alone or in combination of two or more.

In addition to the aforementioned rubber component, the rubber composition used for the rubber-like elastic body layer 8 may be appropriately compounded with a compounding agent commonly used in the rubber industry according to the purpose, such as a softener, a vulcanizing agent, a vulcanization accelerator, a filler, a tackifier resin, an age resistor, an anti-scorch agent, a zinc oxide, and stearic acid. Commercially available products may be suitably used as these compounding agents. The rubber composition used for the rubber-like elastic body layer 8 can be prepared by mixing the respective components using, for example, a Banbury mixer or a roll.

The rubber composition used for the rubber-like elastic body layer 8 is preferably compounded with a softener. Any mineral oil-based softener, vegetable oil-based softener, or synthetic softener may be used as the softener. The mineral oil-based softener includes a petroleum-based softener and a coal tar-based softener. Examples of the petroleum-based softener include processing oils, extender oils, asphalt-based ones, paraffins, liquid paraffin, Vaseline and petroleum resins. Examples of the coal tar-based softener include coal tar and coumarone-indene resins.

Examples of the vegetable oil-based softener include fatty oil-based softeners such as soybean oil, palm oil, pine oil, castor oil, linseed oil, rape seed oil, coconut oil and tall oil, waxes such as factice, beeswax, carnauba wax and lanolin, and fatty acids such as linoleic acid, palmitic acid, stearic acid and lauric acid.

Examples of the synthetic softener include a synthetic resin softener, a liquid rubber or oligomer, a low molecular plasticizer, a high molecular plasticizer, and a reactive plasticizer. Examples of the synthetic resin softener include a phenol aldehyde resin, a styrene resin, and atactic polypropylene. Examples of the liquid rubber or oligomer include polybutene, a liquid butadiene rubber, a liquid isoprene rubber, and a liquid acrylonitrile butadiene rubber. Examples of the low molecular plasticizer include dibutyl phthalate, dioctyl phthalate, and tricresyl phosphate.

The softener is preferably contained in an amount of 5 parts by mass to 50 parts by mass, more preferably 5 parts by mass to 40 parts by mass, and even more preferably 5 parts by mass to 30 parts by mass with respect to 100 parts by mass of the rubber component. When the compounding amount of the softener with respect to the rubber component is within the above ranges, the rubber-like elastic body layer 8 can obtain a dynamic storage modulus E' of 1.0 × 10⁵ Pa to 1.0 × 10⁷ Pa at -20°C. These softeners may be used alone or in combination of two or more.

The rubber composition used for the rubber-like elastic body layer 8 preferably contains a vulcanizing agent and a vulcanization accelerator. Examples of the vulcanizing agent include sulfur. In a case where sulfur is used as the vulcanizing agent, the compounding amount is preferably in a range of 0.1 part by mass to 10.0 parts by mass and more preferably in a range of 1.0 part by mass to 5.0 parts by mass as a sulfur content with respect to 100 parts by mass of the rubber component. Examples of the vulcanization accelerator include thiazole-based vulcanization accelerators such as M (2-mercaptobenzothiazole), DM (dibenzothiazole disulfide), and CZ (N-cyclohexyl-2-benzothiazolesulfenamide), and guanidine-based vulcanization accelerators such as DPG (diphenyl guanidine). The compounding amount of these vulcanization accelerators is preferably in a range of 0.1 part by mass to 5.0 parts by mass and more preferably in a range of 0.2 part by mass to 3.0 parts by mass with respect to 100 parts by mass of the rubber component.

The rubber composition used for the rubber-like elastic body layer 8 is preferably compounded with a filler. An inorganic filler and/or carbon black may be used as the filler. The inorganic filler is not particularly limited. Preferable examples thereof include silica obtain by a wet method, aluminum hydroxide, aluminum oxide, magnesium oxide, montmorillonite, mica, smectite, organized montmorillonite, organized mica, and organized smectite. These substances may be used alone or in combination of two or more.

On the other hand, the carbon black may be any one appropriately selected from those conventionally used as a reinforcing-filler for a rubber. Examples thereof include FEF, SRF, HAF, ISAF, SAF, and GPF.

The compounding amount of the filler preferably contains 5 parts by mass or more of an inorganic filler together with carbon black with respect to 100 parts by mass of the rubber component from the perspective of, for example, the stickiness and peeling resistance.

The rubber composition used for the rubber-like elastic body layer 8 is preferably compounded with a tackifier resin. Examples of the tackifier resin include a phenol-based resin, a terpene-based resin, a modified terpene-based resin, a hydrogenated terpene-based resin, a rosin-based resin, a C₅ petroleum resin, a C₉ petroleum resin, a xylene resin, a coumarone-indene resin, a dicyclopentadiene resin, and a styrene-based resin, among which a phenol-based resin, a terpene-based resin, a modified terpene-based resin, a hydrogenated terpene resin and a rosin-based resin are preferable.

Examples of the phenol-based resin include a resin obtained by condensing p-t-butylphenol and acetylene in the presence of a catalyst, and a condensate of alkyl phenol and formaldehyde. Examples of the terpene-based resin, modified terpene-based resin, and hydrogenated terpene-based resin include a terpene-based resin such as β-pinene resin and α-pinene resin, a hydrogenated terpene-based resin obtained by hydrogenating the aforementioned terpene-based resin, and a modified terpene-based resin obtained by a reaction of terpene and phenol with a Friedel-Crafts catalyst or by condensation with formaldehyde. Examples of the rosin-based resin include natural resin rosin, and rosin derivatives obtained by modifying natural resin rosin with, for example, hydrogenation, disproportionation, dimerization, esterification, or liming.

These resins may be used alone or in combination of two or more, yet a phenol-based resin is particularly preferable among them.

The tackifier resin is preferably used in an amount of 5 parts by mass or more, more preferably 5 parts by mass to 40 parts by mass, and even more preferably 5 parts by mass to 30 parts by mass with respect to 100 parts by mass of the rubber component.

### <Method of Producing Pneumatic Tire>

Next, the method of producing a pneumatic tire of this disclosure will be illustrated and described in detail based on an embodiment thereof.

The method of producing a pneumatic tire of this disclosure includes
forming a green tire by laminating another tire member on the inner liner of a pneumatic tire as described above, and
vulcanizing the green tire.

According to the method of producing a pneumatic tire of this disclosure, another tire member is laminated on the inner liner of a pneumatic tire of this disclosure having high adhesiveness to an adjacent rubber member as described above, so that the adhesiveness between the other tire member and the inner liner is high, and the peeling of the inner liner can be suppressed during the forming of a green tire and after subjecting the tire to running. The forming process of a green tire is not particularly limited, except that the other tire member is laminated on the inner liner of a pneumatic tire of this disclosure as described above. The forming process can be performed in the same manner as a regular forming process of a green tire. In the method of producing a pneumatic tire of this disclosure, a green tire may be formed by laminating a rubber-like elastic body layer on the inner liner as described above to obtain a laminated body and then laminating another tire member on the laminated body.

The end portions of the inner liner in the tire circumferential direction are preferably arranged to overlap each other in the tire radial direction.

When the two end portions of the inner liner in the tire circumferential direction are parallel to the tire width direction, the overlapping width of the end portions of the inner liner in the tire circumferential direction is preferably in a range of 5 mm to 20 mm. When the overlapping width is in the range of 5 mm to 20 mm, it is possible to suppress the peeling of the joint after subjecting the tire to running.

In a case where the end portion of the inner liner alternately has a peak portion and a valley portion, the overlapping width of the end portions of the inner liner in the tire circumferential direction is preferably in a range of 1 mm to 13 mm. When the overlapping width D is 1 mm or more, the peeling of the joint during the forming of a green tire can be sufficiently suppressed. When the overlapping width D is 13 mm or less, the peeling of the joint after subjecting the tire to running can be sufficiently suppressed.

The shape of the green tire can be appropriately selected in accordance with the shape of a pneumatic tire to be produced.

As described above, the adhesion layer of the inner liner of the pneumatic tire uses a polystyrene-based thermoplastic elastomer with a styrene content of 40 mass% to 55 mass%, and the glass transition temperature (Tg) of the adhesion layer is high. Therefore, the adhesion layer hardly flows even under high temperature conditions during vulcanization, which improves the operability in the vulcanization process. The vulcanization process of the green tire may apply a regular vulcanization temperature for a green tire, as long as the green tire is vulcanized at the temperature. The shape of the mold used for vulcanization can be appropriately selected according to the shape of a pneumatic tire to be produced.

### EXAMPLES

The disclosed techniques are described in more detail below using examples, although the present disclosure is not limited to these examples.

### (Example 1)

### <Preparation of Inner Liner>

An inner liner was prepared by co-extrusion using an ethylene-vinyl alcohol copolymer (EVOH) ["E105" made by KURARAY CO.,LTD.], a polyurethane-based thermoplastic elastomer (TPU) ("KURAMIRON 3190" made by KURARAY CO.,LTD.), and a polystyrene-based thermoplastic elastomer (TPS) ["EPOFRIEND AT501" made by Daicel Corporation, styrene-butadiene-styrene block copolymer (SBS), styrene content = 40 mass%] with an extruder. The inner liner had a 21-layer structure where both outermost layers were TPS layers (adhesion layers), inside the adhesion layer was a TPU layer (elastic layer), and a TPU layer (elastic layer) and an EVOH layer (gas barrier layer) were alternately laminated (TPS layer / TPU layer / EVOH layer / TPU layer / ... / EVOH layer / TPU layer / TPS layer, with two TPS layers, ten TPU layers, and nine EVOH layers). The forming conditions of the co-extrusion are as follows. The film-forming properties during the co-extrusion were evaluated.

The thickness of the TPS layer (each of the two layers) was 5 µm, the thickness of the EVOH layer (each of the nine layers) was 0.5 µm, the thickness of the TPU layer adjacent to the TPS layer (each of the two layers adjacent to the TPS layer) was 10.8 µm, and the thickness of the other TPU layer (each of the other eight layers) was 4.2 µm.

### -Extruder Specifications for Each Raw Material-

TPU: 25 mmϕ extruder, "P25-18AC" [made by OSAKA SEIKI KOSAKU CO.,LTD.]
EVOH: 20 mmϕ extruder, ME type "CO-EXT" for laboratory use [made by Toyo Seiki Co., Ltd.]
TPS: 32 mmϕ extruder, GF-32-A [made by Research Laboratory of Plastics Technology Co., Ltd.]
Extrusion temperature for each raw material: all 220°C
T-die specification: a coat-hanger die with a width of 300 mm [made by Research Laboratory of Plastics Technology Co., Ltd.]
Temperature of cooling roll: 50°C
Collecting speed: 4 m/min

The inner liner thus obtained was irradiated with electron beams at an irradiation dose of 200 kGy and an accelerating voltage of 200 kV using an electron beam accelerator [Curetron EB 200-100 made by Nissin High Voltage Co., Ltd.] to obtain a crosslinked inner liner.

### <Preparation and Evaluation of Pneumatic Tire>

A pneumatic tire having the structure illustrated in FIG. 2 at a size of 195/65R15 was prepared by winding the inner liner prepared as described above around a forming drum, laminating a carcass and then the other tire members thereon to form a green tire, and vulcanizing the green tire.

The carcass coating rubber as a portion of the carcass adjacent to the inner liner used a rubber composition formed by compounding 40 parts by mass of GPF grade carbon black (N-660) [50S made by Asahi Carbon Co., Ltd.], 55 parts by mass of a softener [TOP made by DAIHACHI CHEMICAL INDUSTRY CO.,LTD.], 1.0 part by mass of an age resistor [Nocrac 224-S made by Ouchi Shinko Chemical Industrial Co., Ltd.], 1.5 parts by mass of stearic acid [made by ASAHI DENKA CO., LTD.], 0.5 part by mass of a vulcanization accelerator 1 [Accel M made by Kawaguchi Chemical Industry Co., Ltd.], 1 part by mass of a vulcanization accelerator 2 [Accel CZ made by Kawaguchi Chemical Industry Co., Ltd.], 5 parts by mass of zinc oxide [made by Hitech], and 3 parts by mass of sulfur [made by Karuiza Smelter], with respect to 50 parts by mass of a natural rubber and 68.75 parts by mass of SBR [SBR 1712 made by JSR Corporation, containing 37.5 parts by mass of an extender oil with respect to 100 parts by mass of the rubber component].

The cutting face of the end portion of the inner liner in the circumferential direction was made perpendicular to the circumferential direction, and the overlapping width of the end portions was 15 mm.

The adhesion between the inner liner and a bladder during vulcanization was also evaluated. It was evaluated as "good" when the inner liner hardly adhered to the bladder and "poor" when the inner liner adhered to the bladder and was difficult to peel off. The results are listed in Table 1.

Furthermore, the number of air bubbles between the inner liner and the carcass after vulcanization was evaluated. It was evaluated as "excellent" when the number of air bubbles was very small, "good" when the number of air bubbles was small, and "poor" when the number of air bubbles was large. The results are listed in Table 1.

The inner liner and the carcass were cut out from the obtained tire. The peeling resistance between the inner liner and the carcass, and the peeling resistance between the TPS layer (adhesion layer) and the TPU layer (elastic layer) in the inner liner were evaluated with the following method. The results are listed in Table 1.

### (1) Peeling resistance between the inner liner and the carcass, and Peeling resistance between the TPS layer (adhesion layer) and the TPU layer (elastic layer) in the inner liner

The peeling resistance between the layers was measured in accordance with JIS K 6854 by a T-type peeling test with a pulling rate of 50 mm/min.

### (Examples 2 to 8, and Comparative Examples 2 to 5)

An inner liner was prepared and a pneumatic tire was prepared using the inner liner in the same manner as in Example 1, except that the materials listed in Table 1 were used as the raw material for the adhesion layer and the irradiation dose of electron beams was adjusted as indicated in Table 1. The obtained pneumatic tire was evaluated in the same manner as in Example 1.

Note that a polyurethane-based thermoplastic elastomer (TPU) was also used for the adhesion layer in Comparative Example 5.

### (Comparative Example 1)

An inner liner was prepared in the same manner as in Example 1 except that no adhesion layer was provided. The inner liner had a 19-layer structure where both outermost layers were TPU layers (elastic layer), and a TPU layer (elastic layer) and an EVOH layer (gas barrier layer) were alternately laminated (TPU layer / EVOH layer / TPU layer / ... / EVOH layer / TPU layer, with ten TPU layers, and nine EVOH layers). Subsequently, both surfaces of the inner liner were coated with a composition prepared by mixing 75 parts by mass of an epoxidized natural rubber 1 (product name: ENR 25, made by RRIM, 25% of epoxidation degree (epoxidation rate)) and 25 parts by mass of an epoxidized natural rubber 2 (product name: ENR 50, made by RRIM, 50% of epoxidation degree (epoxidation rate)) to each form an adhesion layer with a thickness of 5 µm, to obtain an inner liner.

A pneumatic tire was prepared in the same manner as in Example 1 except that the obtained inner liner was used. The obtained pneumatic tire was evaluated in the same manner as in Example 1.

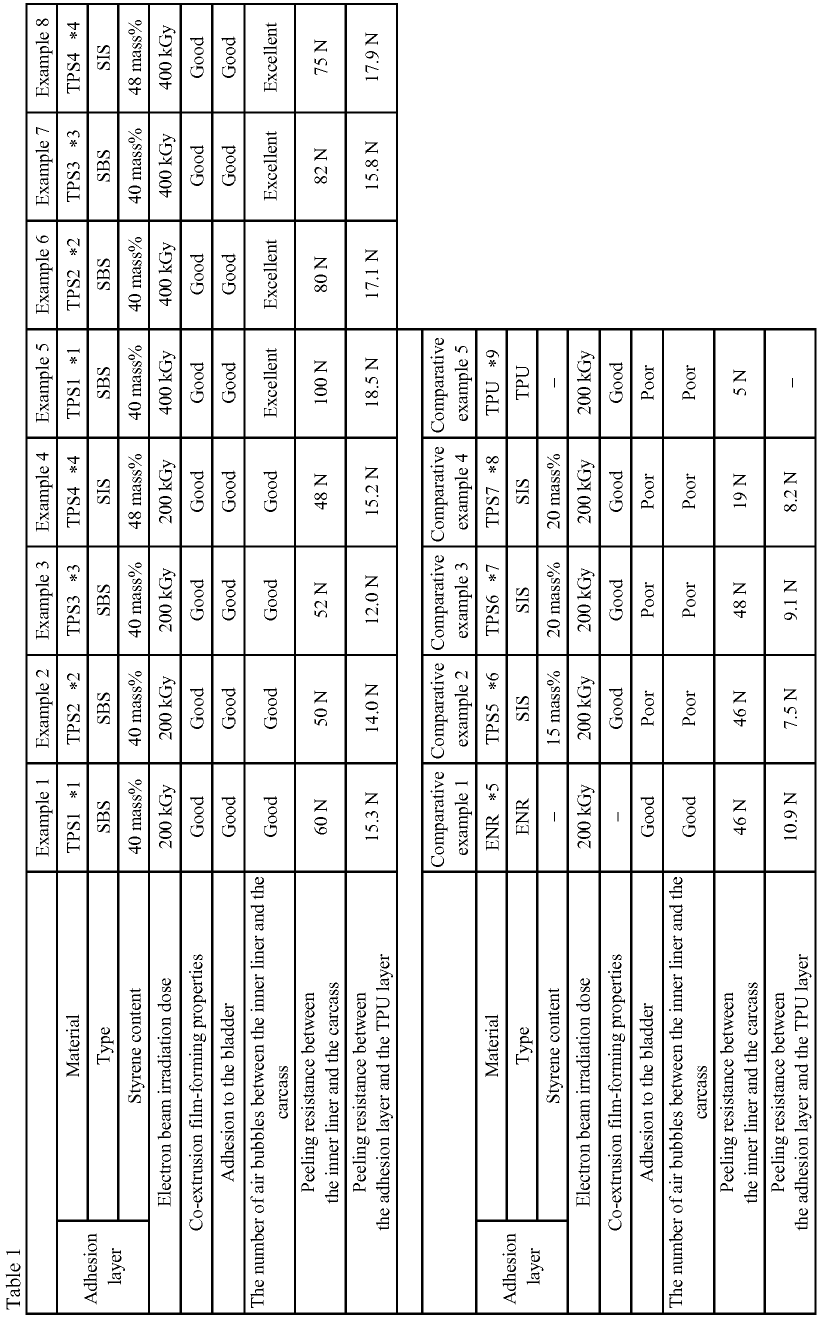

*1 TPS 1: "EPOFRIEND AT501" made by Daicel Corporation, styrene-butadiene-styrene block copolymer (SBS), styrene content = 40 mass%
*2 TPS 2: "Tufprene 912" made by Asahi Kasei Chemicals Corporation, styrene-butadiene-styrene block copolymer (SBS), styrene content = 40 mass%
*3 TPS 3: "Tufprene A" made by Asahi Kasei Chemicals Corporation, styrene-butadiene-styrene block copolymer (SBS), styrene content = 40 mass%
*4 TPS 4: "Quintac 3390" made by Zeon Corporation, styrene-isoprene-styrene block copolymer (SIS), styrene content = 48 mass%
*5 ENR: a mixture of 75 parts by mass of "ENR 25" made by RRIM and 25 parts by mass of "ENR 50" made by RRIM
*6 TPS 5: "SIS 5229" made by JSR Corporation, styrene-isoprene-styrene block copolymer (SIS), styrene content = 15 mass%
*7 TPS 6: "SIS 5250" made by JSR Corporation, styrene-isoprene-styrene block copolymer (SIS), styrene content = 20 mass%
*8 TPS 7: "HYBRAR 5125" made by KURARAY CO.,LTD., styrene-isoprene-styrene block copolymer (SIS), styrene content = 20 mass%
*9 TPU: "KURAMIRON 3190" made by KURARAY CO.,LTD., polyurethane-based thermoplastic elastomer (TPU)

It is understood from Table 1 that the inner liner of this disclosure has high peeling resistance from an adjacent member (carcass) and high adhesiveness to the adjacent member (carcass).

### (Comparative Examples 6 to 8)

A pneumatic tire was prepared in the same manner as in Example 1, except that the inclination angle of the cutting face of the end portion of the inner liner in the circumferential direction from the tire width direction was set as indicated in Table 2 and the overlapping width of the end portions of the inner liner was set as indicated in Table 2.

After the forming of a green tire, the inner surface of the green tire was observed to confirm the presence or absence of peeling of the overlapping part (joint part) of the end portions of the inner liner. The peeling resistance between the adhesion layer and the TPU layer (elastic layer) was also measured in the same manner as in Example 1. The results are listed in Table 2.

### (Comparative Examples 9 to 14, and Examples 9 to 13)

A pneumatic tire was prepared in the same manner as in Example 1, except that it was cut so-called "jaggedly" so that the end portion of the inner liner alternately had a peak portion and a valley portion, and the peak portion at one end of the inner liner and the valley portion at the other end of the inner liner were arranged close to each other as illustrated in FIG. 3. The overlapping width of the end portions of the inner liner, the angle of the top of the peak portion, and the angle of the bottom of the valley portion were as indicated in Table 2.

After the forming of a green tire, the inner surface of the green tire was observed to confirm the presence or absence of peeling of the overlapping part (joint part) of the end portions of the inner liner in the same manner as in Comparative Examples 6 to 8. The peeling resistance between the adhesion layer and the TPU layer (elastic layer) was also measured in the same manner as in Example 1. The results are listed in Table 2.

### (2) Drum durability

The pneumatic tires obtained in Example 1, Examples 9 to 13, and Comparative Examples 6 to 14 were each assembled with a rim of 6J-15, adjusted to an internal pressure of 100 kPa that was lower than a prescribed internal pressure, and subjected to a durability test using a drum testing machine equipped with a drum having a smooth surface. The test was a so-called low-internal pressure long-running drum test, where each tire was pressed against the drum and loaded with a load of 615 kgf, and the drum was driven (rotated) at a same predetermined speed until failure (crack) occurred in the tire (sidewall portion). The test was stopped after running for 10,000 km, and the inner surface of the tire was observed to confirm the peeling degree of the overlapping part (joint part) of the end portions of the inner liner. It was evaluated as "good" in a case where there was no peeling, "acceptable" in a case where there was some peeling yet the tire was still usable, and "poor" in a case where there was peeling and the tire could not be used any more. The results are listed in Table 2.

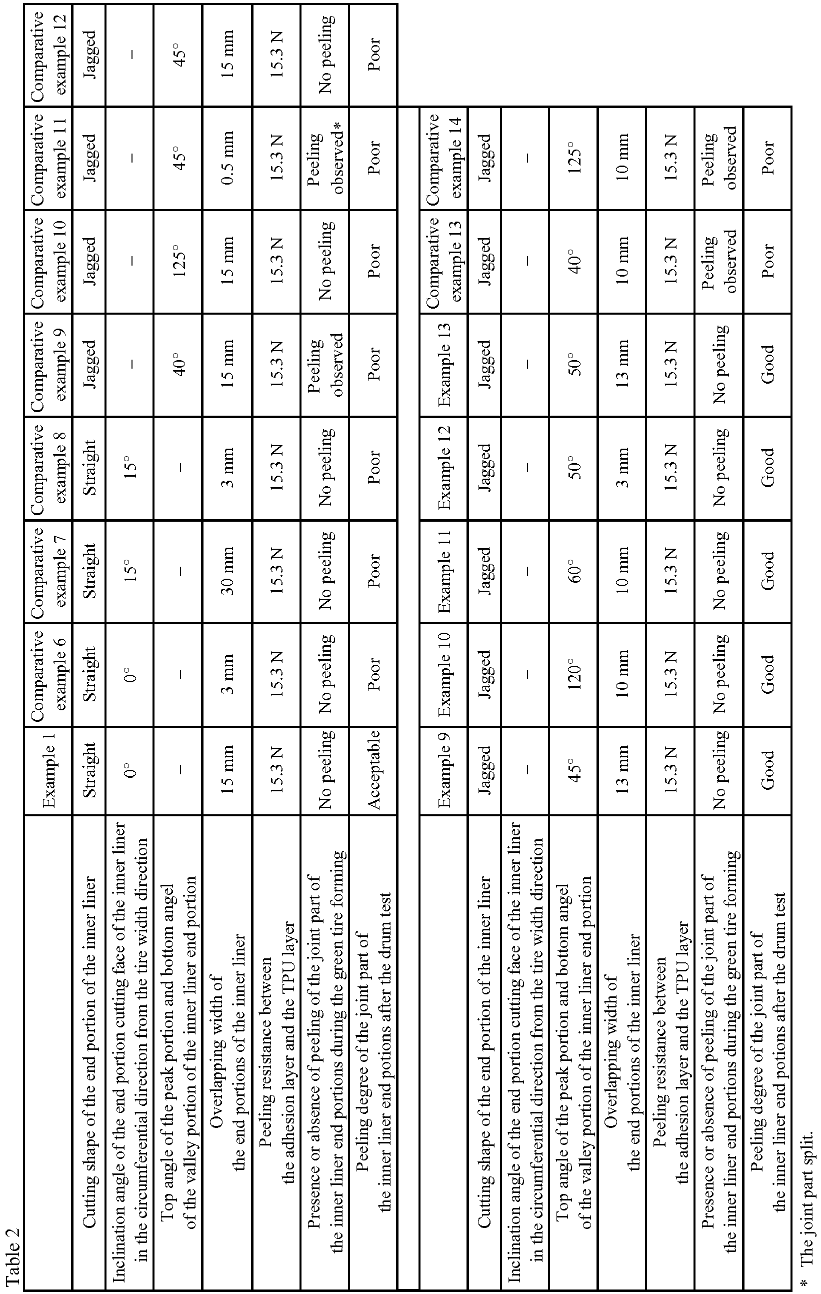

It is understood from Table 2 that the peeling of the joint part of the end portions of the inner liner after the forming of a green tire and after the drum test can be prevented by (1) making the cutting face of the end portion of the inner liner parallel to the tire width direction and setting the overlapping width of the end portions in a range of 5 mm to 20 mm, or (2) forming alternate peak portions and valley portions at the end portion of the inner liner, setting the angle of the top of the peak portion and the angle of the bottom of the valley portion in a range of 45° to 120°, and setting the overlapping width of the end portions in a range of 1 mm to 13 mm.

### (Examples 14 to 16)

A pneumatic tire where the end portion of the inner liner had the structure as illustrated in FIG. 4 was prepared in the same manner as in Example 1, except that a composite body, in which a rubber-like elastic body layer with a thickness as indicated in Table 3 was laminated on the outer side in the tire radial direction of the inner liner, was prepared and the carcass was laminated on the composite body.

The peeling resistance between the adhesion layer and the TPU layer (elastic layer) was also measured in the same manner as in Example 1. The results are listed in Table 3.

The rubber-like elastic body layer used a rubber composition formed by compounding 40 parts by mass of GPF grade carbon black (N-660) [50S made by Asahi Carbon Co., Ltd.], 55 parts by mass of a softener [TOP made by DAIHACHI CHEMICAL INDUSTRY CO.,LTD.], 1.0 part by mass of an age resistor [Nocrac 224-S made by Ouchi Shinko Chemical Industrial Co., Ltd.], 1.5 parts by mass of stearic acid [made by ASAHI DENKA CO., LTD.], 0.5 part by mass of a vulcanization accelerator 1 [Accel M made by Kawaguchi Chemical Industry Co., Ltd.], 1 part by mass of a vulcanization accelerator 2 [Accel CZ made by Kawaguchi Chemical Industry Co., Ltd.], 5 parts by mass of zinc oxide [made by Hitech], and 3 parts by mass of sulfur [made by Karuiza Smelter] with respect to 50 parts by mass of a natural rubber and 68.75 parts by mass of SBR [SBR 1712 made by JSR Corporation, containing 37.5 parts by mass of an extender oil with respect to 100 parts by mass of the rubber component].

### (Example 17)

A pneumatic tire where the end portion of the inner liner had the structure as illustrated in FIG. 5 was prepared in the same manner as in Example 1, except that the rubber-like elastic body layer was separately laminated on the inner liner. The compounding of the rubber-like elastic body layer was the same as in Examples 14 to 16.

The peeling resistance between the adhesion layer and the TPU layer (elastic layer) was also measured in the same manner as in Example 1. The results are listed in Table 3.

### (3) Drum durability

The pneumatic tires obtained in Examples 1 and 14 to 17 were each pressed against a drum under the conditions of an air pressure of 160 kPa (relative pressure), a tire load of 4.0 kN, and an hour speed of 80 km/h. The inner surface of the tire was observed after running for 1000 km to confirm the presence or absence of cracks in the inner liner. The peeling rate (the ratio of the area of the peeled part on the joining surface) of the overlapping part (joint part) of the end portions of the inner liner (or the composite body of the inner liner and the rubber-like elastic body layer) was evaluated. The results are listed in Table 3.

**Table 3**

| | Example 1 | Example 14 | Example 15 | Example 16 | Example 17 |
|---|---|---|---|---|---|
| Method of laminating the rubber-like elastic body layer ** | Without rubber-like elastic body layer | Concurrently | Concurrently | Concurrently | Separately |
| Thickness of the rubber-like elastic body layer | | 0.8 mm | 0.4 mm | 0.2 mm | 0.4 mm |
| Peeling resistance between the adhesion layer and the TPU layer | 15.3 N | 15.3 N | 15.3 N | 15.3 N | 15.3 N |
| Presence or absence of crack in the inner liner after the drum test | No crack | No crack | No crack | No crack | No crack |
| Peeling rate of the joint part of the end portions of the inner liner (or the composite body) after the drum test | 10% | 5% | 0% | 0% | 0% |

| | | | | | |
|---|---|---|---|---|---|
| **"Concurrently" means a composite body of an inner liner and a rubber-like elastic body layer is prepared in advance and the composite body is wound around a forming drum; "separately" means an inner liner and a rubber-like elastic body layer are separately laminated. | | | | | |

It is understood from Table 3 that the peeling of the joint part of the end portions of the inner liner after the drum test can be suppressed by disposing a rubber-like elastic body layer with a thickness of 0.1 mm to 1.0 mm.

### INDUSTRIAL APPLICABILITY

The inner liner of a pneumatic tire of this disclosure can be used for a pneumatic tire. The pneumatic tire of this disclosure can be used as a tire for various vehicles.

### REFERENCE SIGNS LIST

100 inner liner
10 film layer
11 gas barrier layer
12 elastic layer
20 adhesion layer
1 bead portion
2 sidewall portion
3 tread portion
4 carcass
5 belt
6 inner liner
7 bead core
100a one end portion of the inner liner
100b the other end portion of the inner liner
Tₐ peak portion of one end portion of the inner liner
Bₐ valley portion of one end portion of the inner liner
T_{b} peak portion of the other end portion of the inner liner
B_{b} valley portion of the other end portion of the inner liner
T_{α} angle of the top of the peak portion of one end portion of the inner liner
B_{α} angle of the bottom of the valley portion of one end portion of the inner liner
T_{β} angle of the top of the peak portion of the other end portion of the inner liner
B_{β} angle of the bottom of the valley portion of the other end portion of the inner liner
D overlapping width of the end portions of the inner liner in the tire circumferential direction
8 rubber-like elastic body layer
H thickness of the rubber-like elastic body layer
F expansion force of the tire
M moment

## Claims

1. An inner liner of a pneumatic tire comprising a film layer having at least a gas barrier layer, and an adhesion layer disposed on at least one side of the film layer, wherein
the gas barrier layer comprises at least a thermoplastic resin,
the adhesion layer comprises at least a polystyrene-based thermoplastic elastomer, and
the polystyrene-based thermoplastic elastomer has a styrene content of 40 mass% to 55 mass%.

2. The inner liner of a pneumatic tire according to claim 1, wherein the adhesion layer is disposed on both sides of the film layer.

3. The inner liner of a pneumatic tire according to claim 1 or 2, wherein the film layer further comprises an elastic layer disposed on at least one side of the gas barrier layer, and the elastic layer comprises at least a thermoplastic elastomer.

4. The inner liner of a pneumatic tire according to claim 3, wherein
the film layer is formed by alternately laminating the gas barrier layer and the elastic layer, and
the elastic layer is located on both outermost surfaces of the film layer.

5. The inner liner of a pneumatic tire according to any one of claims 1 to 4, wherein a rubber-like elastic body layer with a thickness of 0.1 mm to 1.0 mm is laminated on at least one side of the inner liner.

6. A pneumatic tire comprising the inner liner of a pneumatic tire according to any one of claims 1 to 5, wherein
the inner liner is extended in a tire circumferential direction and end portions of the inner liner in the tire circumferential direction are arranged to overlap each other in a tire radial direction on a tire inner surface,
both the end portions of the inner liner in the tire circumferential direction are parallel to a tire width direction, and
an overlapping width of the end portions of the inner liner in the tire circumferential direction is in a range of 5 mm to 20 mm.

7. A pneumatic tire comprising the inner liner of a pneumatic tire according to any one of claims 1 to 5, wherein
the inner liner is extended in a tire circumferential direction and end portions of the inner liner in the tire circumferential direction are arranged to overlap each other in a tire radial direction on a tire inner surface,
the end portion of the inner liner alternately has a peak portion and a valley portion,
the peak portion has a top angle in a range of 45° to 120° and the valley portion has an bottom angle in a range of 45° to 120° at the end portion of the inner liner, and
an overlapping width of the end portions of the inner liner in the tire circumferential direction is in a range of 1 mm to 13 mm.

8. The pneumatic tire according to claim 6 or 7, comprising a rubber-like elastic body layer with a thickness of 0.1 mm to 1.0 mm on the outer side in the tire radial direction of the inner liner.

9. The pneumatic tire according to claim 8, wherein the rubber-like elastic body layer has a thickness of 0.2 mm to 0.6 mm.

10. A method of producing the pneumatic tire according to any one of claims 6 to 9, comprising
forming a green tire by laminating another tire member on the inner liner of a pneumatic tire according to any one of claims 1 to 5, and
vulcanizing the green tire.
